# EUROPÄISCHE PATENTSCHRIFT

(11) **EP 3 672 773 B1**
(45) Veröffentlichungstag und Bekanntmachung des Hinweises auf die Patenterteilung: **18.11.2026**
(21) Anmeldenummer: 18755795.4
(22) Anmeldetag: 14.08.2018
(51) Int. Cl.: B29B 7/84, B29B 7/48, B29B 7/60, B29B 7/86, B29B 7/88, B29C 48/29, B29C 48/385, B29C 48/44, B29C 48/76, B29C 48/80

(54) **VERFAHREN ZUR HERSTELLUNG VON THERMISCH VERNETZBAREN POLYMERSCHMELZEN DURCH AUFKONZENTRATION VON POLYMERLÖSUNGEN UND DEREN GLEICHZEITIGES ABMISCHEN MIT MODIFIZIERENDEN FLÜSSIGKEITEN IN EINEM PLANETWALZENEXTRUDER**
METHOD FOR PRODUCING THERMALLY CROSS-LINKABLE POLYMER MELTS BY CONCENTRATION OF POLYMER SOLUTIONS AND SIMULTANEOUS MIXING THEREOF WITH MODIFYING LIQUIDS IN A PLANETARY ROLLER EXTRUDER
PROCÉDÉ D'OBTENTION DE POLYMÈRES FONDUS RÉTICULABLES THERMIQUEMENT PAR CONCENTRATION DE SOLUTIONS POLYMÈRES ET MÉLANGE SIMULTANÉ DE CELLES-CI À DES LIQUIDES MODIFICATEURS DANS UNE EXTRUDEUSE PLANÉTAIRE

(30) Priorität: 24.08.2017 DE 102017214851
(43) Veröffentlichungstag der Anmeldung: 01.07.2020
(73) Patentinhaber: TESA SE, 22848 Norderstedt (DE); Entex Rust & Mitschke GmbH, 44805 Bochum (DE)
(72) Erfinder: MASSOW, Klaus, 22393 Hamburg (DE)
(74) Vertreter: tesa SE
(86) Internationale Anmeldenummer: PCT/EP2018/072050
(87) Internationale Veröffentlichungsnummer: WO 2019/038142

(56) Entgegenhaltungen:
- DE-A1- 10 054 854
- DE-A1- 102010 025 995
- DE-A1- 102010 030 706
- DE-A1- 102015 010 460
- US-A1- 2005 049 393
- US-A1- 2013 217 833
- US-A1- 2015 203 600

## Beschreibung

Die Erfindung betrifft ein Verfahren zur Herstellung von thermisch vernetzbaren Polymerschmelzen durch Aufkonzentration von Polymerlösungen und deren gleichzeitiges Abmischen mit modifizierenden Flüssigkeiten in einem Planetwalzenextruder.

Viele Aggregate zur kontinuierlichen Herstellung und Verarbeitung von lösemittelfreien und/oder thermisch vernetzbaren Polymersystemen sind bekannt. Zumeist finden Schneckenmaschinen wie Einschnecken-, Doppelschnecken- oder Planetwalzenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, für diese Aufgabe eingesetzt. Extruder (Einschnecken- und Doppelschneckenextruder, Planetwalzenextruder) finden insbesondere zur Kunststoffverarbeitung Anwendung. Dabei wird der Kunststoff in der Regel in Form eines Granulates eingesetzt und durch den Extruder plastifiziert und über eine Düse ausgetragen, die den plastifizierten Kunststoff in eine gewünschte Form bringt. In der Kunststoffverarbeitung wird unter Plastifizierung das Umwandeln von pulverförmigen oder granulatförmigen Kunststoffen durch Temperatur und Druck verstanden, also eine Erniedrigung der Viskosität des Materials. Hierbei werden in Verarbeitungsmaschinen wie zum Beispiel den Extrudern die Kunststoffe über ihre spezifischen Schmelztemperaturen erhitzt, so dass sie eine heiße, homogene Kunststoffmasse bilden. Ist der Kunststoff dann plastifiziert, kann er im weiteren Prozess zu zum Beispiel Rohren, Platten, Folien oder Spritzgussteilen ausgeformt werden. Auch ein Beschichten auf einen Untergrund wie ein Trägermaterial ist so möglich.

Daneben bezeichnet man als Plastifikation das Zusetzen von Weichmachern (Plastifizier-, Plastifizierungs-, Plastifikationsmittel, Plastifikatoren) zu Kunststoffen, also chemische Substanzen, die die Elastizität des Materials beeinflussen.

Des Weiteren können den plastifizierten Kunststoffen allgemein Feststoffe und/oder Flüssigkeiten zugesetzt werden.

Über das Plastifizieren hinaus ist die Aufgabe des Extruders, die Schmelze zu homogenisieren. Zumeist müssen Additive und Zuschläge in die Kunststoffmatrix eingearbeitet werden. In diesem Fall hat der Extruder die Aufgabe, Zuschläge und Additive gleichmäßig zu verteilen.

Einschneckenextruder bestehen aus einer umlaufenden Schnecke und einem umgebenden Gehäuse. Mit Einschneckenextrudern lassen sich ein hoher Druckaufbau und eine große Förderwirkung erzielen. Jedoch ist die Homogenisierung und Dispergierung im Einschneckenextruder schwach. Gleichwohl sind Einschneckenextruder immer noch die meistbenutzten Extruder.

Doppelschneckenextruder bestehen aus zwei parallel zueinander und miteinander kämmenden Schnecken und einem umgebenden Gehäuse. Mit Doppelschneckenextrudern lassen sich gleichfalls ein hoher Druckaufbau und eine hohe Förderwirkung erzielen. Die Mischwirkung des Doppelschneckenextruders ist um vieles größer als bei einem Einschneckenextruder, Jedoch erfahren Kunststoffe aufgrund der mechanischen Belastung im Doppelschneckenextruder eine mehr oder weniger große Veränderung ihrer Molekülketten. Es gibt Anwendungen, bei denen das dahinstehen kann. Für andere Anwendungen ist die Erhaltung der Molekülketten wichtig. Dann bietet sich der Planetwalzenextruder an.

Planetwalzenextruder bestehen aus einer mehr Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer Buchse ein, welches die Innenverzahnung des Gehäuses bildet. Im Planetwalzenextruder kämmen die Planetspindeln sowohl mit der Zentralspindel als auch mit dem innen verzahnten Gehäuse. Zugleich gleiten die Planetspindeln mit dem in Förderrichtung weisenden Ende an einem Anlaufring. Die Planetwalzenextruder besitzen im Vergleich zu allen anderen Extruderbauarten eine extrem gute Mischwirkung, jedoch eine viel geringere Förderwirkung.

Planetwalzenextruder fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Für die Verarbeitung von Kunststoffen haben Planetwalzenextruder in der Regel einen Füllteil und einen Compoundierteil.

Das Füllteil besteht aus einer Förderschnecke, auf die die zu plastifizierenden Polymere sowie gegebenenfalls zumindest ein Teil weiterer Feststoffkomponenten kontinuierlich dosiert werden. Die Förderschnecke übergibt das Material dann dem Compoundierteil. Innerhalb des Compoundierteils können bei Bedarf weitere Feststoffe zugegeben werden, was vorzugsweise über Seitenschneckendosierer erfolgt, die das Material über Öffnungen im Mantel der Walzenzylinder in den Planetwalzenextruder hineinbefördern und den Austritt der bereits plastifizierten Polymere verhindern.

Die Zugabe flüssiger Rezepturkomponenten erfolgt in der Regel nicht über das Füllteil des Planetwalzenextruders, sondern erst stromab im Compoundierteil, da die Flüssigkeiten häufig den Plastifizierungsprozess der Polymeren ungünstig beeinflussen. Die Zugabe der Flüssigkomponenten kann dabei über Öffnungen zwischen den Walzenzylindern oder über eine spezielle Bohrung im Mantel eines Walzenzylinders erfolgen.

Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird.

Das Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Das umgebende Gehäuse hat in zeitgemäßer Ausbildung einen Doppelmantel. Der Innenmantel wird durch eine Buchse, die mit der Innenverzahnung versehen ist, gebildet. Zwischen Innen- und Außenmantel ist die wichtige Kühlung des Planetwalzenextruders vorgesehen.

Die Planetenspindeln bedürfen keiner Führung in Umfangsrichtung. Durch die Verzahnung ist gewährleistet, dass der Abstand der Planetenspindeln in Umfangsrichtung gleich bleibt. Es kann von einer Eigenführung gesprochen werden.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Planetwalzenextruder haben im Verhältnis zu den anderen genannten Extrudern eine extrem große Plastifizierungswirkung. Dies eröffnet die Möglichkeit, Rohstoffe zu bearbeiten, die in den anderen Extrudern gar nicht oder nur mangelhaft einsetzbar sind. Planetwalzenextruder können aber auch genutzt werden, um die Produktionsleistung erheblich zu erhöhen.

Geeignete Planetwalzenextruder sind beispielsweise beschrieben in der EP 2 098 354 A1, der WO 2017/050400 A1, der WO 2016/124310 A1 und der WO 2014/056553 A1.

Alle Extruder haben das Problem, dass in der Schmelze gasförmige Bestandteile auftreten können, die unerwünscht sind oder die im weiteren Verarbeitungsprozess die Qualität des herzustellenden Produkts negativ beeinflussen.

Solche Bestandteile können zum Beispiel Wasser, Luft oder (Rest-)Lösungsmittel sein. Einige Polymere- beziehungsweise Füllstoffe nehmen Wasser auf. Entweder müssen diese Polymere oder Füllstoffe vorgetrocknet werden, oder aber der im Extruder entstehende Dampf muss abgezogen werden.

Gasförmige Bestandteile, die am Anfang erwünscht und im weiteren Verarbeitungsvorgang unerwünscht sind, können organische Lösungsmittel, Wasser, Luft, Reaktionsbeschleuniger oder Reaktionsinhibitoren beziehungsweise inerte Gase wie beispielsweise Stickstoff, Argon oder Kohlendioxid sein. Soweit kein vollständiger chemischer Umsatz dieser Gase erfolgt, verbleiben Rückstände mit monomeren, oligomeren Abbauprodukten und Zersetzungsprodukten.

Planetwalzenextruder sind in Modulbauweise aus einzelnen Walzenzylindern zusammengesetzt. Jedes Modul besteht aus einer allen Modulen gemeinsamen Zentralspindel, um die Zentralspindel umlaufenden Planetenspindeln und einem Gehäuse. Anzahl und Art der Planetenspindeln können in jedem Modul unterschiedlich sein und der speziellen Verfahrensaufgabe des Moduls angepasst sein. Die Gehäuse der Module sind an den Enden mit Flanschen versehen, über die die Module miteinander gekoppelt werden können. Die Stirnflächen der Module sind über Zwischenringe miteinander verbunden, die es in unterschiedlichen Ausführungen gibt. So gibt es beispielsweise Zwischenringe, die den freien Querschnitt am Ende eines Walzenzylinders verringern und so die Verweilzeit in dem stromaufwärtigen Walzenzylinder beeinflussen und somit Einfluss beispielsweise auf den Dispergierprozess nehmen können. Es gibt weiterhin Ausführungsformen von Zwischenringen, die Fördercharakteristik des Materials innerhalb des Planetwalzenextruders nicht beeinflussen.

Für eine Entgasung in einem Planetwalzenextruder werden die Zwischenringe so gewählt, dass sie an gewünschter Entgasungsstelle über mindestens eine radiale Bohrung verfügen, über die die gasförmigen Bestandteile entweichen können.

Gemäß der DE 100 54 854 A1 sind im Bereich der als Anlaufringe ausgeführten Zwischenringe zugleich Stauscheiben vorgesehen, so dass die Schmelze nach dem Durchtritt an der Stauscheibe von einer Zone höheren Druckes in eine Zone niedrigeren Druckes gelangt. Die Zone niedrigeren Druckes liegt in Förderrichtung des Extruders hinter der Stauscheibe.

Der niedrigere Druck wird durch eine Zone geringer Druckwirkung erreicht. Das kann zum Beispiel durch Unterbrechungen der Zähne der Planetenspindeln erreicht werden. Ein Bereich ohne Druckwirkung kann dadurch erreicht werden, dass die Planetenspindeln in der Zone keine Zähne besitzen oder dass eine Volumenerweiterung dadurch entsteht, dass die Planetenspindeln in einigem Abstand von der Stauscheibe beginnen.

Eine Variante zur Entgasung schlägt gemäß der DE 198 56 235 A1 vor, die Schmelze allein oder zusätzlich rückwärts zu entgasen. Die Rückwärtsentgasung erfolgt dadurch, dass ein Gasabzug erfolgt, bevor in der Kompressionszone des Füllteils eine den Gasdurchtritt verhindernde Materialverdichtung stattfindet. Je nach Abstand der den Gasdurchtritt verhindernden Materialverdichtung kann die Rückwärtsentgasung zum Beispiel in Einzugsrichtung des Materials bis 80 cm Abstand von dem Materialeinzug aufweisen. Aus der DE 10 2010 025 995 A1 ist ein Verfahren zur Herstellung von thermoplastischem Polyurethan aus Polyol und Isocyanat bekannt, bei dem das Polyol und das Isocyanat in flüssiger Form in einen Planetwalzenextruder eingetragen und dort zur Erzeugung von Polyurethan vermischt werden und dabei die Temperatur des Einsatzgutes bei 110 bis 130 °C gehalten wird.

Der Planetwalzenextruder besteht aus mehreren Abschnitten besteht, wobei das Einsatzgut ganz oder teilweise zwischen den Abschnitten aufgegeben wird.

Aus der US 2015/0203600 A1 ist ein Verfahren zum Entfernen flüchtiger Verbindungen aus einer konzentrierten Flüssigkeit bekannt, die mindestens ein nichtflüchtiges Polymer und mindestens eine flüchtige Verbindung enthält.

Zum Trocknen werden mehrere Extruder hintereinander angeordnet. Kern der eingesetzten Anlagenteile ist dabei ein Planetwalzenextruder.

Aufgabe der vorliegenden Erfindung ist es, die Nachteile der bisherigen Verfahren zur Herstellung von thermisch sensitiven Polymeren auszuräumen, so dass innerhalb eines einzigen Aggregates und ohne weitere Folgeschritte aus einer Polymerlösung ein thermisch vernetzbares, lösemittelfreies Polymer hergestellt und zugleich mit weiteren modifizierenden Flüssigkeiten mit finalen Rezepturbestandteilen abgemischt werden kann, so dass eine inline-Beschichtung ohne weitere Verfahrensschritte möglich ist.

Gelöst wird diese Aufgabe durch ein Verfahren zur Herstellung von thermisch vernetzbaren Polymeren, wie es im Hauptanspruch dargelegt ist. Gegenstand der Unteransprüche sind vorteilhafte Ausführungen des Erfindungsgegenstandes.

Demgemäß betrifft die Erfindung ein Verfahren zur Herstellung von thermisch vernetzbaren Polymerschmelzen durch Aufkonzentration von Polymerlösungen und deren gleichzeitiges Abmischen mit modifizierenden Flüssigkeiten in einem Planetwalzenextruder, wobei
a) der Planetwalzenextruder aus einer atmosphärisch betriebenen Füllzone aus mindestens einem Walzenzylinder und aus einer stromab befindlichen, unter Vakuum betriebenen Entgasungs- und Kühlzone besteht, wobei die Länge der atmosphärisch betriebenen Füllzone nicht mehr als die Hälfte, vorzugsweise nicht mehr als ein Drittel der Gesamtlänge des Planetwalzenextruders beträgt,
b) die unter Vakuum betriebene Entgasungs- und Kühlzone des Planetwalzenextruders aus mindestens vier, vorzugsweise genau vier gekoppelten Walzenzylindern besteht, die jeweils über eine Vakuumöffnung im Mantel verfügen, deren Querschnitt mindestens 5 % der von den Planetenspindeln überwalzten Mantelfläche ausmacht und über die die Vakua angelegt werden, wobei die überwalzte Fläche definiert ist als die gesamte Oberfläche des jeweiligen Walzenzylinders in der Entgasungs- und Kühlzone, die von den Planetenspindeln überwalzt werden, also die Innenfläche des Walzenzylinders, in dem sich die Öffnung befindet,
c) alle Walzenzylinder über Zwischenringe voneinander getrennt sind, deren freie Querschnitte so gewählt sind, dass sich das zu verarbeitende Polymer dort aufstauen kann und so sämtliche Walzenzylinder gasdicht voneinander trennt,
d) jeder der mindestens vier Walzenzylinder in der Entgasungs- und Kühlzone eine unabhängig zu betreibende Vakuumzone ausbildet, wobei das Verhältnis des Druckes in der ersten Vakuumzone des ersten Walzenzylinders zu dem Druck in der zweiten Vakuumzone des zweiten Walzenzylinders sowie das Verhältnis des Druckes in der zweiten Vakuumzone des zweiten Walzenzylinders zu dem Druck in der dritten Vakuumzone des dritten Walzenzylinders mindestens 3:1, vorzugsweise mindestens 5:1 beträgt,
e) der Druck in der dritten Vakuumzone des dritten Walzenzylinders weniger als 15 mbar, vorzugsweise weniger als 10 mbar und besonders bevorzugt weniger als 5 mbar beträgt,
f) der Druck in der vierten Vakuumzone des vierten Walzenzylinders vorzugsweise zwischen genau oder mehr als 100 mbar und 500 mbar liegt,
g) die Polymere dem Planetwalzenextruder in Form einer Polymerlösung bestehend aus in Lösungsmittel gelösten Polymeren zugeführt werden, wobei die Polymerlösung vor Eintritt in den Planetwalzenextruder unter Überdruck von bis zu 10 bar auf eine Temperatur gebracht wird, die mindestens 60 °C, bevorzugt mindestens 80 °C und besonders bevorzugt mindestens 100 °C oberhalb der Temperatur liegt, bei der dieselbe Polymerlösung unter Atmosphärendruck siedet,
h) die Polymerlösung über ein Druckhalteventil als überhitze Flüssigkeit direkt in den ersten Walzenzylinder der atmosphärisch betriebenen Füllzone eingespeist wird, wobei
   es zur Verdampfung eines Großteil des Lösungsmittels kommt,
   die Lösungsmitteldämpfe stromauf geleitet werden und
   die Lösungsmitteldämpfe vorzugsweise außerhalb des Planetwalzenextruders kondensiert werden; weiter vorzugsweise werden die kondensierten Lösungsmittel zumindest teilweise dem Herstellprozess des Polymers wieder zugeführt werden
i) nach Verdampfung von zumindest Teilen des Lösemittels in der atmosphärisch betriebenen Füllzone der in die erste Vakuumzone des ersten Walzenzylinders zugeführte Massestrom an Polymerlösung weniger als 75 %, vorzugsweise weniger als 65 %, besonders bevorzugt weniger als 55 % des ursprünglich dem Planetwalzenextruder zugeführten Massestroms an Polymerlösung beträgt,
j) die Vorlauftemperaturen von Zentralspindel und der unter Vakuum stehenden Walzenzylinder in der Entgasungs- und Kühlzone so eingestellt sind, dass die zu entgasenden Polymere im plastifizierten Zustand verbleiben,
k) der Polymerlösung im Bereich der vierten Vakuumzone des vierten Walzenzylinders flüssige thermische Vernetzer sowie gegebenenfalls Vernetzungsbeschleuniger, Farbstofflösungen oder Farbstoffdispersionen vorzugsweise kontinuierlich zudosiert werden, wobei sich die Dosieröffnungen für diese Stoffe innerhalb des ersten Drittels der Verfahrenslänge dieser vierten Vakuumzone befinden,
l) jeder Walzenzylinder in der Entgasungs- und Kühlzone über einen, insbesondere über mindestens zwei separate Kreise zur Flüssigtemperierung verfügt,
   wobei die Polymerlösung so gekühlt wird, dass es zu keiner durch die thermischen Vernetzer induzierte Vergelung der Polymerlösung innerhalb des Planetwalzenextruders oder gegebenenfalls stromab gekoppelter Folgeaggregate kommt,
m) der Restgehalt an Lösemittel in der Polymerlösung nach der dritten Vakuumzone weniger als 1 Gew.-%, vorzugsweise weniger als 0,5 Gew.-% und besonders bevorzugt weniger als 0,1 Gew.-% beträgt,
n) die Polymerlösung aus dem letzten Walzenzylinder kommend einem Beschichtungsaggregat zugeführt wird, weiter vorzugsweise inline.

Die Planetenspindeln in den mindestens vier Walzenzylindern im Bereich der Entgasungs- und Kühlzone weisen gemäß einer bevorzugten Ausführungsform zumindest teilweise an ihrem Umfang Unterbrechungen auf.

Durch diese Unterbrechungen erhöht sich die Verweilzeit der Mischung aus plastifizierten Polymeren und Feststoffen. Dadurch wird die Entgasung effektiver, weil die Gase mehr Zeit haben zu entweichen.

Gemäß einer bevorzugten Variante besteht die Füllzone aus einem Walzenzylinder. Es können alternativ auch zwei oder mehr gekoppelte Walzenzylinder eingesetzt werden, die dann jeweils über einen verzahnten Zwischenring miteinander verbunden sind.

Weiter vorzugsweise werden die Planetenspindeln aller Walzenzylinder der Füllzone sowie die Planetenspindeln aller Walzenzylinder der sich stromab befindlichen Entgasungs- und Kühlzone über eine gemeinsame Zentralspindel angetrieben.

Weiter vorzugsweise sind der mindestens eine Walzenzylinder, insbesondere alle Walzenzylinder der Füllzone mit einer Anzahl von Planetenspindeln bestückt, die zwischen 50 % und 85 % der maximal möglichen Planetenspindelanzahl ausmacht.

Weiter vorzugsweise beträgt die Anzahl der Planetenspindeln innerhalb der unter Vakuum betriebenen Walzenzylinder der Entgasungs- und Kühlzone jeweils zwischen 50 % und 85 %, vorzugsweise zwischen 60 % und 70 % der maximal möglichen Planetenspindelanzahl.

Die maximal mögliche Planetspindelanzahl ist eine prozesstechnische Größe. Ab einer gewissen Anzahl von Planetspindeln ist keine Veränderung des Prozesses mehr feststellbar. Die maximal mögliche Planetspindelanzahl entspricht der Anzahl an Planetspindeln, bis zu der ein Einfluss jeder einzelnen auf den Prozess nachweisbar ist. Im Extremfall führt eine Erhöhung der maximal möglichen Planetspindelanzahl sogar zu einer Verschlechterung der Prozessführung.

Gemäß einer besonders bevorzugten Variante sind die beiden vorstehenden Merkmale für alle Walzenzylinder gleichzeitig erfüllt.

Gemäß einer bevorzugten Variante wird die überhitze Polymerlösung über eine Bohrung in der Wandung des einen atmosphärisch betriebenen Walzenzylinders der Füllzone eingeführt, die sich vorzugsweise innerhalb des ersten Drittels der Walzenzylinderlänge befindet. Wird die Füllzone von mehreren Walzenzylindern gebildet, ist die Bohrung vorzugsweise im ersten Walzenzylinder vorhanden.

Gemäß einer weiteren bevorzugten Ausführungsform der Erfindung sind die Walzenzylinderöffnungen der mindestens vier die Entgasungs- und Kühlzone bildenden Walzenzylinder jeweils mit einem Produktniederhaltewerk ausgestattet, die einen Austritt der plastifizierten Polymere aus dem Planetwalzenextruder verhindern, wobei das Produktniederhaltewerk vorzugsweise als kämmendes Doppelschneckenpaar ausgeführt ist, über dessen freie Flanken den thermisch sensitiven Polymeren Luft sowie gegebenenfalls weitere flüchtige Bestandteile unter dem Einfluss von Wärme und Vakuum entzogen werden.

Gemäß einer weiteren bevorzugten Ausführungsform der Erfindung werden stromab der Polymerlösung flüssige beziehungsweise schmelzeflüssige Modifizierungsstoffe zudosiert, insbesondere über Öffnungen in den Wandungen der mindestens vier die Entgasungs- und Kühlzone bildenden Walzenzylinder, wobei sich diese Öffnungen vorzugsweise innerhalb des ersten Drittels der jeweiligen Walzenzylinderlänge befinden.

Alternativ kann die Einspeisung der flüssigen beziehungsweise schmelzeflüssigen Modifizierungsstoffe in den Planetwalzenextruder über radiale Bohrungen in den Stauringen erfolgen, die sich zwischen den mindestens vier die Entgasungs- und Kühlzone bildenden Walzenzylinder befinden.

Bevorzugt werden die flüssigen oder schmelzeflüssigen Modifizierungsstoffe zu Anfang des zweiten Walzenzylinders der Entgasungs- und Kühlzone und gegebenenfalls in den anschließenden Walzenzylindern der Entgasungs- und Kühlzone vorzugsweise kontinuierlich zudosiert werden und dort homogen in die Polymerlösung eingemischt.

Weiter vorzugsweise werden die flüssigen beziehungsweise schmelzeflüssigen Modifizierungsstoffe kontinuierlich zudosiert und mittels Zentralspindel und Planetenspindeln möglichst homogen in die Polymerlösung eingemischt.

Homogen im Sinne der vorliegenden Erfindung bedeutet dabei mesoskopisch und makroskopisch homogen sowie richtungsunabhängig in den Eigenschaften.

Gemäß einer weiteren bevorzugten Ausführungsform der Erfindung ist stromauf vor dem Planetwalzenextruder ein Einschnecken-Förderteil vorgesehen, das eine atmosphärische Rückwärtsentgasung ermöglicht.

Der Wärmeaustausch im Planetwalzenextruder erfolgt vorzugsweise über die Zentralspindel und/oder die Walzenzylinder, die dazu über Heiz-/Kühlgeräte mit Temperiermedium betrieben werden.

Um eine große Bandbreite an Rezepturen fahren sowie die Eigenschaften der Polymerisate gezielt einstellen zu können, ist eine flexible Temperaturführung notwendig; daher ist es vorteilhaft, für die Zentralspindel und die Walzenzylinder separate Temperierkreise einzusetzen und die Walzenzylinder gegebenenfalls zudem mit mehr als einem Temperierkreis auszurüsten.

Als Temperiermedium wird aus thermodynamischen Gründen Wasser beziehungsweise Druckwasser bevorzugt, das Verfahren ist aber nicht hierauf beschränkt.

Gemäß einer weiteren bevorzugten Variante der Erfindung verfügen die letzten beiden Walzenzylinder in der Entgasungs- und Kühlzone, vorzugsweise der dritte Walzenzylinder und der vierte Walzenzylinder jeweils über zwei separate Kreis zur Flüssigtemperierung, wobei mit den zwei Kreisen zur Flüssigtemperierung ein abfallender Temperaturgradient bei der Walzenzylindertemperierung eingestellt wird, bei dem das Verhältnis der Walzenzylindertemperaturen des zweiten Temperierkreises zum ersten Temperierkreis kleiner als 0,9, vorzugsweise kleiner als 0,8 und besonders bevorzugt kleiner als 0,7 ist. Dieser abfallende Temperaturgradient bei der Walzenzylindertemperierung verhindert das Vergelen der thermisch sensitiven Polymerlösung.

Weiter vorzugsweise ist das Verhältnis der Temperatur der aufzukonzentrierenden Polymerlösung und der Temperatur der Polymerlösung nach der vierten Vakuumzone nicht größer als 0,75, vorzugsweise nicht größer als 0,65.

Vorzugsweise erfolgt die Einspeisung der plastifizierten Polymere in den Planetwalzenextruder mittels einer Schmelzepumpe, mittels eines Ein- oder Mehrwellenextruders oder mittels einer Fass- oder Tankschmelzeinheit.

Weiter vorzugsweise erfolgt der Austritt der thermisch sensitiven Polymerlösung aus dem Planetwalzenextruder mittels einer am Ende des letzten Walzenzylinderbereiches gekoppelten Schmelzepumpe.

Weiter vorzugsweise ist das Beschichtungsaggregat ein Kalander oder eine Düse, durch den beziehungsweise durch die die thermisch sensitive Polymerlösung auf ein Trägermaterial aufgebracht wird.

Erfindungsgemäß wird vorgeschlagen, die Beschichtung der bevorzugt hergestellten Klebemassen mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Denkbar sind auch Beschichtungswerke wie Kalander (I,F,L-Kalander), so dass die bevorzugte Klebemasse beim Durchgang durch einen oder mehrere Walzenspalte auf die gewünschte Dicke ausgeformt wird.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

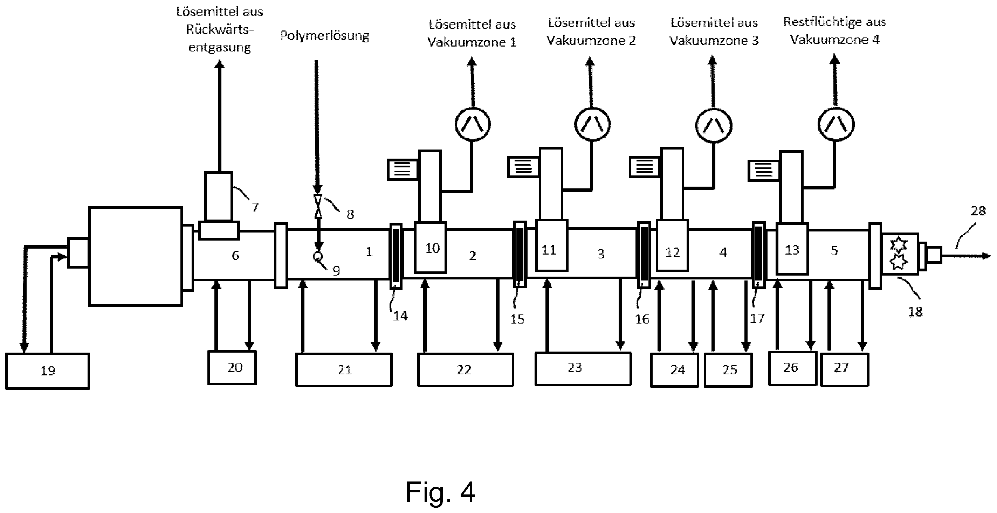

Ein erfindungsgemäßer Planetwalzenextruder ist in besonders vorteilhafter Gestaltung in der Figur 4 gezeigt.

Hierbei wird eine überhitzte Polymerlösung über ein Druckhaltenventil (8) in eine Bohrung (9) am ersten Walzenzylinder (1) eingespeist. Durch schlagartige Entspannung auf Atmosphärendruck verdampft ein Großteil des Lösungsmittels. Dieser Lösemitteldampf entweicht dem Planetwalzenextruder über einen Entgasungsschacht (7) auf dem atmosphärisch betriebenen Einschneckenteil (6), das sich stromauf des ersten Walzenzylinders (1) befindet.

Die bereits von einem Großteil ihres Lösungsmittels befreite Polymerlösung wird dann in die nachfolgenden Walzenzylinder (2 bis 4) der Vakuumzone gefördert, wo sie unter dem Einfluss von Wärme und verminderten Druck weitestgehend vom gesamten Lösemittel befreit wird. Zwischen allen Walzenzylindern (1 bis 5) befinden sich Zwischenringe (14 bis 17), die so dimensioniert sind, dass die Walzenzylinder gasdicht voneinander getrennt sind, so dass jeder Walzenzylinder mit einer unterschiedlichen Druckstufe betrieben werden kann.

Das Anlegen von Vakuum an den Walzenzylindern erfolgt über Bohrungen (10 bis 13) in den Wandungen der Walzenzylinder. Um ein Austreten von Polymer zu verhindern, sind diese Bohrungen mit Produktniederhaltewerken verschlossen.

Um die Belastung für thermische Vernetzer gering zu halten und eine Durchvernetzung des Polymers zu verhindern, werden diese vorzugsweise nach dem vorletzten Walzenzylinder (4) zugegeben, zum Beispiel über eine radiale Bohrung des vor dem fünften Walzenzylinder (5) befindlichen Zwischenrings (17).

Zentralspindel (19), Füllzone (20 bis 21) sowie die Walzenzylinder der Vakuumzone (22 bis 27) haben jeweils eigene Temperierkreise. Die Temperierkreise der letzten beiden Walzenzylinder (4 und 5) verfügen vorzugsweise über jeweils zwei separate Temperierkreise (24 bis 27), um eine individuellere Temperaturführung im Falle des Einsatzes von thermischen Vernetzern zu ermöglichen.

Der Austrag des lösemittelfreien Polymers (28) erfolgt mittels einer am letzten Walzenzylinder (5) gekoppelten Schmelzepumpe (18).

Das erfindungsgemäße Verfahren zeichnet sich dadurch aus, dass Polymerlösungen innerhalb eines einzigen Aggregates von ihrem Lösemittel befreit und mit flüssigen, die Polymereigenschaften modifizierenden Flüssigkeiten sowie thermischen Vernetzern abgemischt werden können, ohne dass nachfolgend weitere Verfahrensschritte oder Aggregate erforderlich sind, um die nunmehr lösemittelfreie Polymerabmischung einem Beschichtungsaggregat zuführen zu können.

Gemäß einer bevorzugten Ausführungsform der Erfindung handelt es sich bei den Polymeren in der Polymerlösung um Polymere aus der Gruppe der nicht-thermoplastischen Elastomere, der thermoplastischen Synthesekautschuke, der Polyacrylate, der Polyurethane, der Polyepoxide sowie Mischungen in beliebigen Verhältnissen hieraus.

Weiter vorzugsweise handelt es sich bei den flüssigen beziehungsweise schmelzeflüssigen Modifizierungsstoffen um Harze, Weichmacher, Öle, Benetzungshilfsmittel oder Thixotropiermittel, die gegebenenfalls mit weiteren Zuschlagstoffen abgemischt sind.

Weiter vorzugsweise werden als Lösungsmittel in der aufzukonzentrierenden Polymerlösung Lösemittel aus der Gruppe der aliphatischen Ketone, der aliphatischen Alkohole, der aliphatischen Ester, der aliphatischen und aromatischen Kohlenwasserstoffe, der aliphatischen Polyether sowie beliebiger Mischungen hieraus verwendet.

Besonders bevorzugt handelt es sich bei den aus dem Planetwalzenextruder kommenden Mischungen um Selbsthaftklebemassen oder um aushärtbare Strukturklebemassen.

Der Begriff des "Klebens" beschreibt im Allgemeinen ein Fertigungsverfahren zum stoffschlüssigen Fügen von Substraten. Beim Kleben haftet der Klebstoff durch physikalische Wechselwirkung - gelegentlich auch durch chemische Wechselwirkung - der sogenannten Adhäsion, an den Substraten und verbindet diese zumeist dauerhaft. Da das Kleben einerseits eine großflächige und kraftschlüssige Verbindung der Fügeteile erlaubt und andererseits aufgrund seiner materialschonenden Eigenschaften geeignet ist, nahezu sämtliche Materialien miteinander zu verbinden, werden Klebeverfahren sowohl für den Heimbedarf als auch für die industrielle Anwendung vielfältig angewendet. Immer öfter werden andere Fügeverfahren, wie beispielsweise Schweißen oder Löten, aber auch Verschrauben, durch Klebeverfahren ersetzt. So stehen mittlerweile rund 50 % der in Deutschland produzierten Waren mit Klebstoffen in Verbindung.

Von zunehmender Bedeutung sind in diesem Zusammenhang Haftklebstoffe, bei welchen es sich um nicht aushärtende, permanent klebrige Klebstoffe handelt, deren chemischer Zustand sich nach Fertigstellung der Klebstoffmasse nicht oder nur noch geringfügig verändert. Haftklebstoffe verfügen über eine permanente Oberflächenklebrigkeit, den sogenannten Tack, wodurch ein Verkleben durch leichtes Anpressen, ohne Zufuhr thermischer Energie und ohne chemische Reaktionen, erfolgen kann. Üblicherweise besitzen Haftklebstoffe einen dynamischen Adhäsionsaufbau, das heißt, die Endfestigkeit der Klebeverbindung wird erst nach mehreren Minuten oder sogar Tagen erreicht. Basierend auf ihrer speziellen Anwendungsart werden Haftklebstoffe in drei Gruppen unterteilt:
Eine weitverbreitete Einsatzmöglichkeit von Haftklebstoffen sind wiederverklebbare Produkte, bei welchen der Klebstoff nur eine geringe Klebekraft aufweist. Das Klebstoffsystem wird beim Ablösen nicht beschädigt und kann mehrmals verklebt werden. Beispiele hierfür sind Haftnotizzettel oder Verschlussklebungen, wie beispielsweise von Papiertaschentuchpackungen oder von Feuchttücherpackungen.

Eine weitere weitverbreitete Einsatzmöglichkeit von Haftklebstoffen sind lösbare Produkte, in welchen der Haftklebstoff eine mittlere bis hohe Klebkraft aufweist. Bei diesen Produkten lässt sich die auf eine dauerhafte Verklebung ausgelegte Klebeverbindung wieder lösen, wobei oftmals sogar eine rückstandsfreie Lösung der Klebeverbindung möglich ist. Lösbare Produkte in diesem Sinne sind beispielsweise Wundpflaster, Aufkleber, Etiketten, selbstklebende Folien und Verpackungsbänder.

Schließlich werden Haftklebstoffe auch in zunehmenden Maße für permanentklebende Produkte eingesetzt, wobei der Haftklebstoff in diesem Fall eine besonders hohe Klebekraft besitzt und für semistrukturelle Anwendungen geeignet ist. Permanentklebende Produkte mit Haftklebstoffen werden daher oftmals für industrielle Anwendungen eingesetzt, wie beispielsweise bei der Befestigung von Außenspiegeln, Schutzleisten oder an Dämpfungs-Versteifungselementen im Fahrzeugbau. Weitere Anwendungen sind der Fenster- und Fassadenbau, Spiegelklebungen, aber auch die Herstellung von Elektronikartikeln, wie beispielsweise Mobiltelefonen, oder aber von selbstklebenden Produkten, die beim Ablösen bewusst sichtbar verändert oder zerstört werden sollen, wie beispielsweise Typenschilder oder TÜV-Plaketten.

Besonders bevorzugt werden damit Klebebandrollen aus dem *ACX^{plus}*-Sortiment der Firma tesa hergestellt.

Derartige Klebebänder umfassen eine Trägerschicht, die auch als Hartphase bezeichnet wird. Die Polymerbasis der Hartphase ist bevorzugt ausgewählt aus der Gruppe bestehend aus Polyvinylchloriden (PVC), Polyethylenterephthalaten (PET), Polyurethanen, Polyolefinen, Polybutylenterephthalaten (PBT), Polycarbonaten, Polymethylmethacrylaten (PMMA), Polyvinylbutyralen (PVB), Ionomeren und Mischungen aus zwei oder mehreren der vorstehend aufgeführten Polymere. Besonders bevorzugt ist die Polymerbasis der Hartphase ausgewählt aus der Gruppe bestehend aus Polyvinylchloriden, Polyethylenterephthalaten, Polyurethanen, Polyolefinen und Mischungen aus zwei oder mehreren der vorstehend aufgeführten Polymere. Die Hartphase ist im Wesentlichen eine Polymerfolie, deren Polymerbasis aus den vorstehenden Materialien ausgewählt ist. Unter einer "Polymerfolie" wird eine dünne, flächige, flexible, aufwickelbare Bahn verstanden, deren Materialbasis im Wesentlichen von einem oder mehreren Polymer(en) gebildet wird.

Unter "Polyurethanen" werden in weitgefasstem Sinne polymere Substanzen verstanden, in denen sich wiederholende Einheiten durch Urethan-Gruppierungen -NH-CO-O-miteinander verknüpft sind.

Unter "Polyolefinen" werden Polymere verstanden, die stoffmengenbezogen zu mindestens 50 % Wiederholungseinheiten der allgemeinen Struktur -[-CH₂-CR¹R²-]ₙ-enthalten, worin R¹ für ein Wasserstoffatom und R² für ein Wasserstoffatom oder für eine lineare oder verzweigte, gesättigte aliphatische oder cycloaliphatische Gruppe steht. Soweit die Polymerbasis der Hartphase Polyolefine umfasst, handelt es sich bei diesen besonders bevorzugt um Polyethylene, insbesondere um Polyethylene mit ultrahoher Molmasse (UHMWPE).

Unter der "Polymerbasis" wird das Polymer beziehungsweise werden die Polymere verstanden, das/die den größten Gewichtsanteil aller in der betreffenden Schicht beziehungsweise Phase enthaltenen Polymere ausmacht/ausmachen.

Die Dicke der Hartphase beträgt insbesondere ≤ 150 µm. Bevorzugt beträgt die Dicke der Hartphase 10 bis 150 µm, besonders bevorzugt 30 bis 120 µm und insbesondere 50 bis 100 µm, beispielsweise 70 bis 85 µm. Unter der "Dicke" wird die Ausdehnung der betreffenden Schicht beziehungsweise Phase entlang der z-Ordinate eines gedachten Koordinatensystems verstanden, bei dem die durch die Maschinenrichtung und die Querrichtung zur Maschinenrichtung aufgespannte Ebene die x-y-Ebene bildet. Die Dicke wird durch Messung an mindestens fünf verschiedenen Stellen der betreffenden Schicht beziehungsweise Phase und anschließende Bildung des arithmetischen Mittels aus den erhaltenen Messergebnissen ermittelt. Die Dickenmessung der Hartphase erfolgt dabei in Einklang mit DIN EN ISO 4593.

Derartige Klebebänder können weiterhin eine Weichphase aufweisen, die einen Polymerschaum, eine viskoelastische Masse und/oder eine elastomere Masse umfassen. Die Polymerbasis der Weichphase ist bevorzugt ausgewählt aus Polyolefinen, Polyacrylaten, Polyurethanen und Mischungen aus zwei oder mehreren der vorstehend aufgeführten Polymere.

In der einfachsten Variante besteht das Klebeband nur aus einer Weichphase.

Unter einem "Polymerschaum" wird ein Gebilde aus gasgefüllten kugel- oder polyederförmigen Zellen verstanden, welche durch flüssige, halbflüssige, hochviskose oder feste Zellstege begrenzt werden; ferner ist der Hauptbestandteil der Zellstege ein Polymer oder ein Gemisch mehrerer Polymere.

Unter einer "viskoelastischen Masse" wird ein Material verstanden, das neben Merkmalen der reinen Elastizität (Zurückkehren in den Ausgangszustand nach äußerer mechanischer Einwirkung) auch Merkmale einer viskosen Flüssigkeit zeigt, beispielsweise das Auftraten innerer Reibung bei Deformation. Insbesondere werden Haftklebemassen auf Polymerbasis als viskoelastische Massen angesehen.

Unter einer "elastomeren Masse" wird ein Material verstanden, das gummielastisches Verhalten aufweist und bei 20 °C wiederholt auf mindestens das Zweifache seiner Länge gedehnt werden kann und nach Aufhebung des für die Dehnung erforderlichen Zwanges sofort wieder annähernd seine Ausgangsdimension einnimmt.

Bezüglich des Verständnisses der Begriffe "Polymerbasis", "Polyurethane" und "Polyolefine" gilt das oben Gesagte. Unter "Polyacrylaten" werden Polymere verstanden, deren stoffmengenbezogene Monomerbasis zu mindestens 50% aus Acrylsäure, Methacrylsäure, Acrylsäureestern und/oder Methacrylsäureestern besteht, wobei Acrylsäureester und/oder Methacrylsäureester zumindest anteilig generell und bevorzugt zu mindestens 50% enthalten sind. Insbesondere wird unter einem "Polyacrylat" ein Polymerisat verstanden, welches durch radikalische Polymerisation von Acryl- und/oder Methylacrylmonomeren sowie gegebenenfalls weiteren, copolymerisierbaren Monomeren erhältlich ist.

Besonders bevorzugt ist die Polymerbasis der Weichphase ausgewählt aus Polyolefinen, Polyacrylaten und Mischungen aus zwei oder mehreren der vorstehend aufgeführten Polymere. Sofern Polyolefine zu der Polymerbasis der Weichphase gehören, sind diese bevorzugt ausgewählt aus Polyethylenen, Ethylen-Vinylacetat-Copolymeren (EVA) und Gemischen aus Polyethylenen und Ethylen-Vinylacetat-Copolymeren (PE/EVA-Blends). Die Polyethylene können dabei verschiedene Polyethylen-Typen sein, beispielsweise HDPE, LDPE, LLDPE, Blends aus diesen Polyethylen-Typen und/oder Gemische davon.

In einer Ausführungsform umfasst die Weichphase einen Schaum und jeweils eine ober- und unterhalb der geschäumten Schicht angeordnete Haftklebeschicht, wobei die Polymerbasis des Schaums aus einem oder mehreren Polyolefin(en) besteht und die Polymerbasis der Haftklebeschichten aus einem oder mehreren Polyacrylat(en) besteht. Besonders bevorzugt besteht die Polymerbasis des Schaums dabei aus einem oder mehreren Polyethylen(en), Ethylen-Vinylacetat-Copolymer(en) und Gemischen aus einem oder mehreren Polyethylen(en) und/oder Ethylen-Vinylacetat-Copolymer(en). Ganz besonders bevorzugt besteht die Polymerbasis des Schaums dabei aus einem oder mehreren Polyethylen(en).

Der Polyolefin-basierte Schaum selbst ist nicht oder nur sehr wenig haftklebrig. Der Verbund mit der Hartphase beziehungsweise dem Substrat wird daher vorteilhaft durch die Haftklebeschichten bewirkt. Die Schäumung des Polyolefin-basierten Ausgangsmaterials des Schaums wird bevorzugt durch zugesetztes Treibgas im Sinne einer physikalischen Schäumung und/oder durch ein chemisches Schäumungsmittel, beispielsweise durch Azodicarbonsäurediamin, hervorgerufen.

In einer weiteren Ausführungsform ist die Weichphase ein haftklebriger Polymerschaum, dessen Polymerbasis aus einem oder mehreren Polyacrylaten besteht. "Haftklebriger Schaum" bedeutet, dass der Schaum selbst eine Haftklebemasse ist und somit ein Auftrag einer zusätzlichen Haftklebeschicht nicht erforderlich ist. Dies ist vorteilhaft, weil im Herstellungsprozess weniger Schichten zusammengefügt werden müssen und das Risiko von Ablösungserscheinungen und anderen unerwünschten Phänomenen an den Schichtgrenzen sinkt.

Selbstklebemassen, auch Haftklebemassen genannt, sind im erfindungsgemäßen Sinne insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche, die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse wie Klebharze, Weichmacher und dergleichen beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Polyacrylate sind bevorzugt erhältlich durch zumindest anteiliges Einpolymerisieren von funktionellen, mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn die Polyacrylate einpolymerisierte Acrylsäure und/oder Methacrylsäure aufweisen. All diese Gruppen weisen eine Vernetzungsfähigkeit mit Epoxidgruppen auf, wodurch die Polyacrylate vorteilhaft einer thermischen Vernetzung mit eingebrachten Epoxiden zugänglich wird.

Weitere Monomere, die als Comonomere für die Polyacrylate verwendet werden können, sind neben Acrylsäure- und/oder Methacrylsäureestern mit bis zu 30 C-Atomen beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Die Eigenschaften des betreffenden Polyacrylats lassen sich insbesondere über eine Variation der Glasübergangstemperatur des Polymers durch unterschiedliche Gewichtsanteile der einzelnen Monomere beeinflussen. Die Polyacrylate können vorzugsweise auf die folgende Monomerzusammensetzung zurückgeführt werden:
a) Acrylsäureester und/oder Methacrylsäureester der folgenden Formel

   CH₂ = C(R^{I})(COOR^{II})

   wobei R^{I} = H oder CH₃ und R^{II} ein Alkylrest mit 4 bis 14 C-Atomen ist,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Bevorzugt beruhen die Polyacrylate auf einer Monomerenzusammensetzung, in der die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% enthalten sind (die Angaben sind bezogen auf die Monomermischung für das "Basispolymer", also ohne Zusätze eventueller Additive zu dem fertigen Polymer, wie Harze etc.). In diesem Fall weist das Polymerisationsprodukt eine Glastemperatur ≤ 15 °C (DMA bei geringen Frequenzen) und haftklebende Eigenschaften auf.

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigte Isomere, wie zum Beispiel 2 Ethylhexylacrylat oder 2 Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

### Beispielhafte Monomere der Komponente (c) sind:

Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxy-,ethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzyl-acrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht M_{w} von 4000 bis 13000 g/mol), Poly(methylmethacrylat)ethylmethacrylat (M_{w} von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, N-tert-Butylacrylamid und Allylacrylat.

Die Herstellung der Polyacrylate ("Polyacrylate" wird im Rahmen der Erfindung als synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, vorzugsweise von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) (Vazo^{®} 67^{™} der Firma DuPont) oder 2,2'-Azobis(2-methylpropionitril) (2,2'-Azobisisobutyronitril; AIBN; Vazo^{®} 64^{™} der Firma DuPont) verwendet.

Als Lösungsmittel für die Herstellung der Polyacrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte M_{W} der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol (die Angaben des mittleren Molekulargewichtes M_{W} und der Polydispersität PD in dieser Schrift beziehen sich auf die Bestimmung per Gelpermeationschromatographie.

Als Eluent wird THF mit 0,1 Vol.-% Trifluoressigsäure eingesetzt. Die Messung erfolgt bei 25 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁵ Å und 10⁶ Å mit jeweils ID 8,0 mm x 300 mm eingesetzt. Es wurde gegen PMMA-Standards gemessen.

Die Probenkonzentration beträgt 4 g/l, die Durchflussmenge 1,0 ml pro Minute. Es wird gegen PMMA Standards gemessen. (µ = µm; 1 Å = 10⁻¹⁰ m).). Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.)

Das Polyacrylat hat vorzugsweise einen K-Wert von 30 bis 90, besonders bevorzugt von 40 bis 70, gemessen in Toluol (1%ige Lösung, 25 °C). Der K-Wert nach Fikentscher ist ein Maß für das Molekulargewicht und die Viskosität des Polymerisats.

Besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Beispiele für derartige Polyacrylate, die nach dem RAFT-Verfahren hergestellt werden, sind in der US 6,765,078 B2 und US 6,720,399 B2 beschrieben. Auch über N-Oxyle lassen sich entsprechende Polyacrylate herstellen, wie beispielsweise in der EP 1 311 555 B1 beschrieben ist. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind in den Schriften US 5,945,491 A, US 5,854,364 A und US 5,789,487 A beschrieben.

Die Monomere zur Herstellung der Polyacrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Das Polyacrylat beziehungsweise die Polyacrylate sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanaten als Vernetzer, insbesondere den in der EP 1 791 922 A1 beschriebenen aliphatischen oder mit Aminen deaktivierten trimerisierten Isocyanaten.

Geeignete Isocyanate sind insbesondere trimerisierte Derivate von MDI [4,4-Methylen-di(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur^{®} N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339^{®}, jetzt HF9 ^{®} (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).

Bevorzugt wird der thermische Vernetzer, beispielsweise das trimerisierte Isocyanat, zu 0,1 bis 5 Gew.-%, insbesondere zu 0,2 bis 1 Gew.-%, bezogen auf die Gesamtmenge des zu vernetzenden Polymers, eingesetzt.

Bevorzugt umfasst der thermische Vernetzer mindestens eine epoxidgruppenhaltige Substanz. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon beziehungsweise deren Derivaten und anderen) erhältlich sind.

Sehr geeignete Ether sind beispielsweise 1,4-Butandioldiglycidether, Polyglycerol-3-Glycidether, Cyclohexandimethanoldiglycidether, Glycerintriglycidether, Neopentylglykoldiglycidether, Pentaerythrittetraglycidether, 1,6-Hexandioldiglycid¬ether), Polypropylenglykoldiglycidether, Trimethylolpropantriglycidether, Penta¬erythrittetraglycidether, Bisphenol-A-diglycidether und Bisphenol-F-diglycidether.

Besonders bevorzugt ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine , die mit den Bausteinen der zu vernetzenden Polymere keine oder nur geringfüge Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethyl-amino)propyl) harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Weiterhin kann es vorgesehen sein, dass auch ein an sich haftklebriger Polymerschaum mit einer aus Polyacrylat(en) bestehenden Polymerbasis ober- und/oder unterseitig mit einer Haftklebemasse beschichtet ist, wobei die Polymerbasis dieser Haftklebemasse bevorzugt ebenfalls aus Polyacrylaten besteht. Es können alternativ andere beziehungsweise anders vorbehandelte Klebeschichten, also beispielsweise Haftklebeschichten und/oder hitzeaktivierbare Schichten auf der Basis anderer Polymere als Poly(meth)acrylate zu der geschäumten Schicht kaschiert werden. Geeignete Basispolymere sind Naturkautschuke, Synthesekautschuke, Acrylatblockcopolymere, Vinylaromatenblockcopolymere, insbesondere Styrolblockcopolymere, EVA, Polyolefine, Polyurethane, Polyvinylether und Silikone. Bevorzugt enthalten diese Schichten keine nennenswerten Anteile an migrierfähigen Bestandteilen, die mit dem Material der geschäumten Schicht so gut verträglich sich, dass sie in signifikanter Menge in die geschäumte Schicht diffundieren und dort die Eigenschaften verändern.

Generell kann die Weichphase des Klebebandes mindestens ein klebrig machendes Harz enthalten.

Unter der Bezeichnung "Klebharz", englisch "Tackifier Resins", versteht der Fachmann einen Stoff auf Harzbasis, der die Klebrigkeit erhöht.

Als Klebharze können bei der Selbstklebemasse beispielsweise als Hauptkomponente insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt C₈- und C₉-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von C₈- und C₉-Aromaten (zum Beispiel Regalite und Regalrez Serien; Eastman Inc. oder Arkon M; Arakawa), hydrierte Polyterpenharze (zum Beispiel Clearon M; Yasuhara), hydrierte C₅/C₉-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Auch andere nicht hydrierte Kohlenwasserstoffharze, nicht hydrierte Analoga der oben beschriebenen hydrierten Harze, können eingesetzt werden.

Weiterhin können Kolophonium basierende Harze (zum Beispiel Foral, Foralyn) verwendet werden.

Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Erfindungsgemäß bevorzugte Klebharze sind (teil-)hydrierte Kohlenwasserstoffharze auf Basis von C₅-, C₅/C₉- oder C₉ sowie Polyterpenharze auf Basis von α-Pinen und/oder β-Pinen und/oder δ-Limonen sowie Terpenphenolharze.

Ganz besonders bevorzugt sind Terpenphenolharze, und zwar insbesondere nur Terpenphenolharze, ohne dass weitere Harztypen Verwendung finden.

Zur Stabilisierung der Haftklebemasse werden üblicherweise primäre Antioxidantien wie zum Beispiel sterisch gehinderte Phenole, sekundäre Antioxidantien wie zum Beispiel Phosphite oder Thioether und/oder C-Radikalfänger zugesetzt.

Der Haftklebemasse können zur Einstellung von optischen und klebtechnischen Eigenschaften Additive wie Füllstoffe, Farbstoffe oder Alterungsschutzmittel (Antiozonantien, Lichtschutzmittel usw.) enthalten.

Als Additive zur Klebemasse werden typischerweise genutzt:
- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Kalziumcarbonate, Zinkoxide, Titandioxide, Aluminiumoxide oder Aluminiumoxidhydroxide.

Die Konzentration der die optischen und klebtechnischen Eigenschaften beeinflussenden Additive liegt vorzugsweise bei bis zu 20 Gew.-%, weiter vorzugsweise bei bis zu 15 Gew. %.

Die aufgezählten Stoffe sind nicht zwingend, die Klebemasse funktioniert auch, ohne dass diese einzeln oder in beliebiger Kombination zugesetzt sind, also ohne Füllstoffe und/oder Farbstoffe und/oder Alterungsschutzmittel.

Die Weichphase des Klebebandes kann einen oder mehrere Additive enthalten. Der oder die Additiv(e) kann/können in einer oder in mehreren Schichten der Weichphase vorliegen.

Bevorzugt umfasst die Weichphase einen Polymerschaum, und der Polymerschaum enthält teil- oder vollexpandierte Mikroballons, insbesondere, wenn die Polymerbasis des Polymerschaums ein oder mehrere Polyacrylat(e) umfasst und ganz besonders bevorzugt, wenn die Polymerbasis des Polymerschaums aus einem oder mehreren Polyacrylat(en) besteht. Bei Mikroballons handelt es sich um elastische Hohlkugeln, die eine thermoplastische Polymerhülle aufweisen; sie werden daher auch als expandierbare polymere Mikrosphären oder als Mikrohohlkugeln bezeichnet. Diese Kugeln sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung. Als niedrigsiedende Flüssigkeit sind insbesondere niedere Alkane, beispielsweise Isobutan oder Isopentan geeignet, die als verflüssigtes Gas unter Druck in der Polymerhülle eingeschlossen sind. Durch ein physikalisches Einwirken auf die Mikroballons, beispielsweise durch eine Wärmeeinwirkung - insbesondere durch Wärmezufuhr oder -erzeugung, hervorgerufen zum Beispiel durch Ultraschall oder Mikrowellenstrahlung - erweicht einerseits die äußere Polymerhülle, gleichzeitig geht das in der Hülle befindliche flüssige Treibgas in seinen gasförmigen Zustand über. Bei einer bestimmten Paarung von Druck und Temperatur - auch als kritische Paarung bezeichnet - dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, wie zum Beispiel von der Firma Akzo Nobel die Expancel DU-Typen (dry unexpanded), welche sich im Wesentlichen über ihre Größe (6 bis 45 µm Durchmesser im unexpandierten Zustand) und ihre zur Expansion benötigte Starttemperatur (75 °C bis 220 °C) differenzieren.

Weiterhin sind unexpandierte Mikroballontypen auch als wässrige Dispersion mit einem Feststoff- beziehungsweise Mikroballonanteil von ca. 40 bis 45 Gew.-% erhältlich, darüber hinaus auch als polymergebundende Mikroballons (Masterbatche), zum Beispiel in Ethylvinylacetat mit einer Mikroballonkonzentration von ca. 65 Gew.-%. Ferner sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung eines in der Weichphase des Klebebandes enthaltenen Polymerschaums geeignet.

Besonders bevorzugt enthält der Polymerschaum Mikroballons, die im nicht expandierten Zustand bei 25 °C einen Durchmesser von 3 µm bis 40 µm, insbesondere von 5 µm bis 20 µm, und/oder nach Expansion einen Durchmesser von 10 µm bis 200 µm, insbesondere von 15 µm bis 90 µm, aufweisen.

Bevorzugt enthält der Polymerschaum bis zu 30 Gew.-% Mikroballons, insbesondere zwischen 0,5 Gew.-% und 10 Gew.-%, jeweils bezogen auf die Gesamtmasse des Polymerschaums.

Der Polymerschaum der Weichphase des Klebebandes - sofern diese einen Polymerschaum umfasst - ist bevorzugt gekennzeichnet durch die weitgehende Abwesenheit von offenzelligen Hohlräumen. Besonders bevorzugt weist der Polymerschaum einen Anteil von Hohlräumen ohne eigene Polymerhülle, also von offenzelligen Kavernen, von nicht mehr als 2 Vol-% auf, insbesondere von nicht mehr als 0,5 Vol.-%. Der Polymerschaum ist somit bevorzugt ein geschlossenzelliger Schaum.

Eine Haftklebemasse, die expandierte polymere Mikrokugeln enthält, kann auch teilweise nicht vollständig oder gar nicht expandierte Mikrokugeln enthalten. Im Prozess stellt sich vielmehr eine Verteilung unterschiedlicher Expansionszustände ein.

Im erfindungsgemäßen Sinne bedeutet, dass expandierte Mikroballons voll- aber auch teilexpandierte Mikroballons umfassen. Nicht expandierte Mikroballons können zusätzlich vorhanden sein.

Eine expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und/oder - im Spektrum der in der Kunststoffverarbeitung möglichen Temperaturen - nicht-thermoplastischem Glas.

Geeignet für die Haftklebemasse sind außerdem - unabhängig gewählt von anderen Additiven - Polymervollkugeln wie PMMA-Kugeln, Glashohlkugeln, Glasvollkugeln, Phenolharzkugeln, keramische Hohlkugeln, keramische Vollkugeln und/oder Kohlenstoffvollkugeln ("Carbon Micro Balloons"), vorzugsweise sind die genannten Bestandteile nicht in der Haftklebemasse enthalten.

Die geschäumte Haftklebemasse stellt einen syntaktischen Schaum dar. Bei einem syntaktischen Schaum sind die Hohlräume voneinander getrennt und die in den Hohlräumen befindlichen Substanzen (Gas, Luft) durch eine Membran von der umgebenden Matrix abgetrennt. Dadurch ist das Material wesentlich stärker als herkömmliche Schäume mit unverstärkten Gaseinschlüssen.

Optional kann die Weichphase des Klebebandes auch pulver- und/oder granulatförmige Füllstoffe, Farbstoffe und Pigmente, insbesondere auch abrasive und verstärkende Füllstoffe wie zum Beispiel Kreiden (CaCO₃), Titandioxide, Zinkoxide und Ruße auch zu hohen Anteilen, das heißt von 0,1 bis 50 Gew.-%, bezogen auf die Gesamtmasse der Weichphase, enthalten.

Weiterhin können schwerentflammbare Füllstoffe wie beispielsweise Ammoniumpolyphosphat; elektrisch leitfähige Füllstoffe wie beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive wie beispielsweise Eisen-(III)-oxide; weitere Additive zur Volumenerhöhung, wie beispielsweise Blähmittel, Glasvollkugeln, Glashohlkugeln, carbonisierte Mikrokugeln, phenolische Mikrohohlkugeln, Mikrokugeln aus anderen Materialien; Kieselsäure, Silicate, organisch nachwachsende Rohstoffe wie beispielsweise Holzmehl, organische und/oder anorganische Nanopartikel, Fasern; Alterungsschutzmittel, Lichtschutzmittel, Ozonschutzmittel und/oder Compoundierungsmittel in der Weichphase enthalten sein. Als Alterungsschutzmittel können bevorzugt sowohl primäre, zum Beispiel 4-Methoxyphenol oder Irganox^{®} 1076, als auch sekundäre Alterungsschutzmittel, zum Beispiel Irgafos^{®} TNPP oder Irgafos^{®} 168 der Firma BASF, gegebenenfalls auch in Kombination miteinander, eingesetzt werden. Als weitere Alterungsschutzmittel können Phenothiazin (C-Radikalfänger) sowie Hydrochinonmethylether in Gegenwart von Sauerstoff sowie Sauerstoff selbst eingesetzt werden.

Die Dicke der Weichphase beträgt vorzugsweise 200 bis 1800 µm, besonders bevorzugt 300 bis 1500 µm, insbesondere 400 bis 1000 µm. Die Dicke der Weichphase wird nach ISO 1923 bestimmt.

Die Verbindung von Hart- und Weichphase beziehungsweise auch von in der Hart- und/oder Weichphase vorgesehenen Schichten untereinander zum Klebeband kann beispielsweise durch Laminieren, Kaschieren oder Coextrusion erfolgen. Es ist möglich, dass Hart- und Weichphase direkt, das heißt unmittelbar, miteinander verbunden sind. Ebenso ist es möglich, dass zwischen Hart- und Weichphase eine oder mehrere haftvermittelnde Schicht(en) angeordnet ist/sind. Das Klebeband kann darüber hinaus weitere Schichten enthalten.

Bevorzugt ist mindestens eine der miteinander zu verbindenden Schichten, stärker bevorzugt sind mehrere der miteinander zu verbindenden Schichten und ganz besonders bevorzugt sind alle der miteinander zu verbindenden Schichten mit Corona- (mit Luft oder Stickstoff), Plasma- (Luft, Stickstoff oder andere reaktive Gase beziehungsweise reaktive, als Aerosol einsetzbare Verbindungen) oder Flammenvorbehandlungsmethoden vorbehandelt.

Auf der Rückseite, das heißt auf der vom Substrat abgewandten Seite der Hartphase, ist bevorzugt eine Funktionsschicht aufgebracht, die beispielsweise Trenneigenschaften oder UV-stabilisierende Eigenschaften aufweist. Diese Funktionsschicht besteht bevorzugt aus einer Folie mit einer Dicke von ≤ 20 µm, besonders bevorzugt von ≤ 10 µm, insbesondere von ≤ 8 µm, beispielsweise von ≤ 5 um oder einem Lack mit einer Dicke von ≤ 10 µm, besonders bevorzugt von ≤ 6 µm, insbesondere von ≤ 3 µm, beispielsweise von ≤ 1,5 µm. Sowohl die Folie als auch der Lack enthalten bevorzugt einen UV-Absorber, und/oder die Polymerbasis der Folie beziehungsweise des Lacks enthält UV-absorbierende und/oder UV-abweisende Gruppen.

Folien können durch Laminieren, Kaschieren oder Coextrusion auf die Rückseite der Hartphase aufgebracht werden. Bei der Folie handelt es sich bevorzugt um eine metallisierte Folie. Die Polymerbasis der Folie ist bevorzugt ausgewählt aus der Gruppe bestehend aus Polyarylenen, Polyvinylchloriden (PVC), Polyethylenterephthalaten (PET), Polyurethanen, Polyolefinen, Polyutylenterephthalaten (PBT), Polycarbonaten, Polymethylmethacrylaten (PMMA), Polyvinylbutyralen (PVB), Ionomeren und Mischungen aus zwei oder mehreren der vorstehend aufgeführten Polymere. "Hauptbestandteil" bedeutet hier "Bestandteil mit dem größten Gewichtsanteil, bezogen auf das Gesamtgewicht der Folie". Mit Ausnahme der Polyarylene weisen alle aufgeführten Materialien der Folie bevorzugt einen hohen Gehalt an UV-Stabilisatoren auf.

In einer speziellen Ausführungsform besteht das Klebeband in auf das Substrat gerichteter Reihenfolge aus einer Funktionsschicht (wie vorstehend beschrieben); einer Hartphase und einer Weichphase bestehend aus einer Haftklebeschicht, einem Polymerschaum, dessen Polymerbasis aus einem oder mehreren Polyolefinen besteht, und einer weiteren Haftklebeschicht. Die untere Haftklebeschicht kann mit einem Releaseliner abgedeckt sein, dieser wird jedoch nicht zum Klebeband gerechnet.

In einer weiteren speziellen Ausführungsform besteht das Klebeband in auf das Substrat gerichteter Reihenfolge aus einer Funktionsschicht (wie vorstehend beschrieben); einer Hartphase und einer haftklebrigen Weichphase, deren Polymerbasis aus einem oder mehreren Polyacrylaten besteht. Auch bei dieser Ausführungsform kann die Unterseite, das heißt die dem Substrat zugewandte Seite, der Weichphase mit einem Releaseliner abgedeckt sein, dieser wird jedoch nicht zum Klebeband gerechnet.

Bevorzugt handelt es sich bei den Klebebändern um geschäumte Acrylatmassen insbesondere der oben beschriebenen Art, die zusätzlich einen (oder mehrere) Zwischenträger haben können.

Als nicht-thermoplastisches Elastomer kann die Klebemasse Kautschuk, insbesondere Naturkautschuk enthalten. Weiterhin kann die Klebemasse synthetische Kautschuke wie beispielsweise Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Polyarcylate, der Acrylatkautschuke (ACM), der Polybutadiene (PB), der Ethylen-Vinylacetat-Copolymeren (EVA) und der Polyurethane und/oder deren Blends einzeln oder in beliebiger Abmischung auch mit Naturkautschuk enthalten.

Der besonders bevorzugte Naturkautschuk oder die Naturkautschuke können grundsätzlich aus allen erhältlichen Qualitäten wie zum Beispiel Crepe-, RSS-, ADS-, TSR- oder CV-Typen, je nach benötigtem Reinheits- und Viskositätsniveau gewählt werden.

Vorzugsweise können dem Naturkautschuk zur Verbesserung der Verarbeitbarkeit thermoplastische Elastomere wie beispielsweise Synthesekautschuke mit einem Anteil von bis zu 5 Gew.-% zugesetzt werden.

Stellvertretend genannt seien an dieser Stelle vor allem die besonders verträglichen Styrol-Isopren-Styrol (SIS)- und Styrol-Butadien-Styrol (SBS)-Typen.

Vorzugsweise besteht das Basispolymer der Haftklebemasse aus Naturkautschuk, weiter vorzugsweise ist neben Naturkautschuk kein weiteres elastomeres Polymer in der Haftklebemasse vorhanden.

In diesem Fall ist die Haftklebemasse eine Zusammensetzung aus Naturkautschuk, einem oder mehreren Klebharz(en), vorzugsweise Alterungsschutzmittel(n) und expandierten polymeren Mikrokugeln, was eine bevorzugte Ausführungsform darstellt. Darüber hinaus können zusätzlich die später erläuterten Füllstoffe und/oder Farbstoffe in geringen Mengen gegebenenfalls enthalten sein.

Vorzugsweise wird die Haftklebemasse in Klebebändern genutzt.

Als Klebebänder im erfindungsgemäßen Sinne sollen dabei alle ein- oder beidseitig mit der erfindungsgemäßen Klebemasse beschichteten flächigen oder bandförmigen Trägergebilde verstanden werden, also neben klassi¬schen Bändern auch Etiketten, Abschnitte, Stanzlinge (gestanzte mit Klebemasse beschichtete flächige Trägergebilde), zweidimensional ausgedehnte Gebilde (zum Beispiel Folien) und dergleichen, auch Mehrschichtanordnungen.

Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Neben den genannten Transferklebebändern werden doppelseitige Klebebänder bevorzugt, bei denen der Träger, insbesondere die Trägerfolie beidseitig mit der erfindungsgemäßen Haftklebemasse ausgerüstet ist.

Das Klebeband kann in festen Längen wie zum Beispiel als Meterware oder aber als Endlosware auf Rollen (archimedische Spirale) zur Ver¬fügung gestellt werden.

Als Trägermaterialien für das Haftklebeband werden die dem Fachmann geläufigen und üblichen Trägermaterialien wie Papier, Gewebe, Vlies oder Folien aus zum Beispiel Polyester wie Polyethylenterephthalat (PET), Polyethylen, Polypropylen, verstreckten Polypropylen, Polyvinylchlorid, verwendet. Besonders bevorzugt werden Trägermaterialien, die nicht oder nur sehr schwach dehnfähig sind wie BOPP und insbesondere PET.

Als Materialien für die Folie werden Polyester, insbesondere Polyethylenterephthalat, Polyamid, Polyimid oder mono- oder biaxial verstrecktes Polypropylen verwendet. Ebenfalls möglich ist auch die Verwendung von mehrschichtigen Laminaten oder Coextrudaten.

Vorzugsweise ist die Folie einschichtig.

Um sehr gute Ergebnisse für die Aufrauhung zu erzielen, ist es zu empfehlen, als Reagenz zum Ätzen der Folie Trichloressigsäure (Cl₃C-COOH) oder Trichloressigsäure in Kombination mit inerten kristallinen Verbindungen, bevorzugt Siliziumverbindungen, besonders bevorzugt [SiO₂]ₓ, einzusetzen.

Sinn der inerten kristallinen Verbindungen ist, in die Oberfläche der PET-Folie eingebaut zu werden, um auf diese Weise die Rauigkeit und die Oberflächenenergie zu verstärken.

Die Dicke der Folie liegt gemäß einer bevorzugten Ausführungsform zwischen 5 und 250 µm, vorzugsweise zwischen 6 und 120 µm, insbesondere zwischen 12 und 100 µm, ganz besonders zwischen 12 und 50 µm.

Vorzugsweise besteht die Folie aus Polyethylenterephthalat und weist eine Dicke zwischen 12 und 50 µm auf.

Die Trägerfolien können darüber hinaus weitere Additive wie UV-Schutzmittel oder auch halogenfreie Flammschutzmittel enthalten.

Zur Herstellung der Folie kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Das Trägermaterial kann ein- oder vorzugsweise beidseitig mit der erfindungsgemäßen Haftklebemasse ausgerüstet sein. Bei dem beidseitig mit der erfindungsgemäßen Haftklebemasse ausgerüsteten Klebeband bildet zumindest eine Schicht die erfindungsgemäße Haftklebemasse.

Das Haftklebeband wird dadurch gebildet, dass auf den Träger partiell oder vollflächig die Klebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Vorteilhaft ist die Verwendung eines Haftvermittlers, einer so genannten Primerschicht, zwischen Träger und Klebmasse oder einer physikalischen Vorbehandlung der Trägeroberfläche zur Verbesserung der Haftung der Klebmasse auf dem Träger.

Als Primer sind die bekannten Dispersion- und Lösungsmittelsysteme verwendbar zum Beispiel auf Basis von Isopren- oder Butadien haltigen Kautschuk, Acrylatkautschuk, Polyvinyl, Polyvinyliden und/oder Cyclokautschuk. Isocyanate oder Epoxyharze als Additive verbessern die Haftung und erhöhen zum Teil auch die Scherfestigkeit des Haftklebstoffes. Der Haftvermittler kann ebenfalls mittels einer Coextrusions-Schicht auf der einen Seite der Trägerfolie aufgebracht werden. Als physikalische Oberflächenbehandlungen eigenen sich zum Beispiel Beflammung, Corona oder Plasma oder Coextrusionsschichten.

Des Weiteren kann das Trägermaterial (bei einem einseitig klebend ausgerüsteten Klebeband) rück- oder oberseitig, also der Klebemassenseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.

Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer C-Zahl von mindestens 10 wie zum Beispiel Octadecyl.

Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von C₁₄- bis C₂₈-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethyl-Siloxanen) oder Fluorsilikonverbindungen.

Weiter kann das Trägermaterial vor- beziehungsweise nachbehandelt werden. Gängige Vorbehandlungen sind Hydrophobieren, Coronavorbehandlungen wie N₂-Corona oder Plasmavorbehandlungen, geläufige Nachbehandlungen sind Kalandern, Tempern, Kaschieren, Stanzen und Eindecken.

Das Klebeband kann ebenfalls mit einer handelsüblichen Trennfolie oder -papier, die üblicherweise aus einem Basismaterial aus Polyethylen, Polypropylen, Polyester oder Papier das ein- oder doppelseitig mit Polysiloxan beschichtet ist, laminiert sein.

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen
- Figur 1: ein einseitiges Haftklebeband,
- Figur 2: ein beidseitiges Haftklebeband,
- Figur 3: ein trägerfreies Haftklebeband (Transferklebeband).

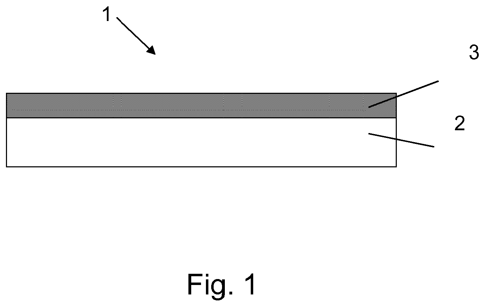

Figur 1 zeigt ein einseitig klebendes Haftklebeband 1. Das Haftklebeband 1 weist eine Klebeschicht 2 auf, die durch Beschichtung einer der zuvor beschriebenen Haftklebemasse auf einen Träger 3 hergestellt wurde.

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

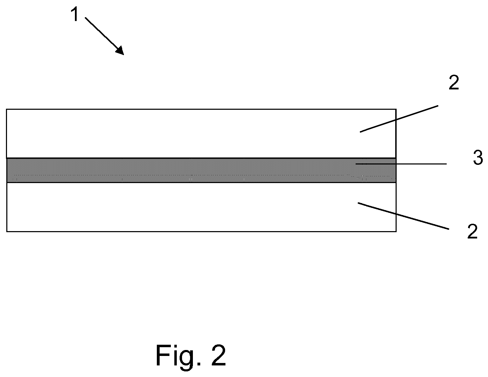

Der in Figur 2 dargestellte Produktaufbau zeigt ein Haftklebeband 1 mit einem Träger 3, der beidseitig mit einer Haftklebemasse beschichtet ist und somit zwei Klebeschichten 2 aufweist.

Auch bei dieser Ausgestaltung wird bevorzugt zumindest eine Klebeschicht 2 mit einer Trennfolie abgedeckt. Bei einem aufgerollten Klebeband kann diese eine Trennfolie gegebenenfalls auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere Haftklebemasse eingesetzt werden.

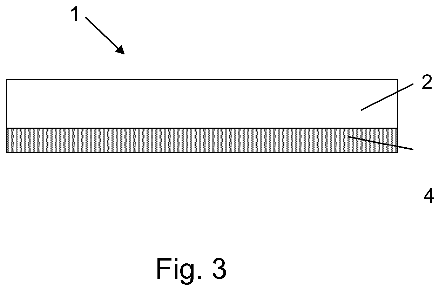

Der in Figur 3 dargestellte Produktaufbau zeigt ein Haftklebeband 1 in Form eines Transferklebebandes, das heißt, ein trägerfreies Haftklebeband 1. Hierzu wird die Haftklebemasse einseitig auf eine Trennfolie 4 beschichtet und bildet so eine Haftklebeschicht 2 aus.

Gegebenenfalls wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebemassenseite zu realisieren.

### Bezugszeichenliste

- 1): Atmosphärisch betriebener Walzenzylinder
- 2): Vakuumzone 1
- 3): Vakuumzone 2
- 4): Vakuumzone 3
- 5): Vakuumzone 4
- 6): Einschneckenteil für atmosphärische Rückwärtsentgasung
- 7): Entgasungsschacht
- 8): Druckhalteventil für Polymerlösung
- 9): Öffnung im Walzenzylinder für Zudosierung von Polymerlösung
- 10): Öffnung im Walzenzylinder 2 mit Produktniederhaltewerk
- 11): Öffnung im Walzenzylinder 3 mit Produktniederhaltewerk
- 12): Öffnung im Walzenzylinder 4 mit Produktniederhaltewerk
- 13): Öffnung im Walzenzylinder 5 mit Produktniederhaltewerk
- 14): Zwischenring
- 15): Zwischenring mit radialen Bohrungen
- 16): Zwischenring mit radialen Bohrungen
- 17): Zwischenring mit radialen Bohrungen
- 18): Schmelzepumpe für Produktaustrag
- 19): Temperierkreis für Zentralspindel
- 20): Temperierkreis für Förderschneckenteil
- 21): Temperierkreis für Walzenzylinder 1
- 22): Temperierkreis für Walzenzylinder 2
- 23): Temperierkreis für Walzenzylinder 3
- 24): Erster Temperierkreis für Walzenzylinder 4
- 25): Zweiter Temperierkreis für Walzenzylinder 4
- 26): Erster Temperierkreis für Walzenzylinder 5
- 27): Zweiter Temperierkreis für Walzenzylinder 5
- 28): Produktaustrag

## Patentansprüche

1. Verfahren zur Herstellung von thermisch vernetzbaren Polymerschmelzen durch Aufkonzentration von Polymerlösungen und deren gleichzeitiges Abmischen mit modifizierenden Flüssigkeiten in einem Planetwalzenextruder, **dadurch gekennzeichnet, dass**
a) der Planetwalzenextruder aus einer atmosphärisch betriebenen Füllzone aus mindestens einem Walzenzylinder (1) und aus einer stromab befindlichen, unter Vakuum betriebenen Entgasungs- und Kühlzone besteht, wobei die Länge der atmosphärisch betriebenen Füllzone nicht mehr als die Hälfte, vorzugsweise nicht mehr als ein Drittel der Gesamtlänge des Planetwalzenextruders beträgt,
b) die unter Vakuum betriebene Entgasungs- und Kühlzone des Planetwalzenextruders aus mindestens vier, vorzugsweise genau vier gekoppelten Walzenzylindern (2, 3, 4, 5) besteht, die jeweils über eine Vakuumöffnung (10, 11, 12, 13) im Mantel verfügen, deren Querschnitt mindestens 5 % der von den Planetenspindeln überwalzten Mantelfläche ausmacht und über die die Vakua angelegt werden,
c) alle Walzenzylinder (2, 3, 4, 5) über Zwischenringe (15, 16, 17) voneinander getrennt sind, deren freie Querschnitte so gewählt sind, dass sich das zu verarbeitende Polymer dort aufstauen kann und so sämtliche Walzenzylinder (2, 3, 4, 5) gasdicht voneinander trennt,
d) jeder der mindestens vier Walzenzylinder (2, 3, 4, 5) in der Entgasungs- und Kühlzone eine unabhängig zu betreibende Vakuumzone (2, 3, 4, 5) ausbildet, wobei das Verhältnis des Druckes in der ersten Vakuumzone (2) des ersten Walzenzylinders (2) zu dem Druck in der zweiten Vakuumzone (3) des zweiten Walzenzylinders (3) sowie das Verhältnis des Druckes in der zweiten Vakuumzone (3) des zweiten Walzenzylinders (3) zu dem Druck in der dritten Vakuumzone (4) des dritten Walzenzylinders (4) mindestens 3:1, vorzugsweise mindestens 5:1 beträgt,
e) der Druck in der dritten Vakuumzone (4) des dritten Walzenzylinders (4) weniger als 15 mbar, vorzugsweise weniger als 10 mbar und besonders bevorzugt weniger als 5 mbar beträgt,
f) der Druck in der vierten Vakuumzone (5) des vierten Walzenzylinders (5) vorzugsweise zwischen genau oder mehr als 100 mbar und 500 mbar liegt,
g) die Polymere dem Planetwalzenextruder in Form einer Polymerlösung bestehend aus in Lösungsmittel gelösten Polymeren zugeführt werden, wobei die Polymerlösung vor Eintritt in den Planetwalzenextruder unter Überdruck von bis zu 10 bar auf eine Temperatur gebracht wird, die mindestens 60 °C, bevorzugt mindestens 80 °C und besonders bevorzugt mindestens 100 °C oberhalb der Temperatur liegt, bei der dieselbe Polymerlösung unter Atmosphärendruck siedet,
h) die Polymerlösung über ein Druckhalteventil (8) als überhitze Flüssigkeit direkt in den ersten Walzenzylinder (1) der atmosphärisch betriebenen Füllzone eingespeist wird,
i) nach Verdampfung von zumindest Teilen des Lösemittels in der atmosphärisch betriebenen Füllzone der in die erste Vakuumzone (2) des ersten Walzenzylinders (2) zugeführte Massestrom an Polymerlösung weniger als 75 %, vorzugsweise weniger als 65 %, besonders bevorzugt weniger als 55 % des ursprünglich dem Planetwalzenextruder zugeführten Massestroms an Polymerlösung beträgt,
j) die Vorlauftemperaturen von Zentralspindel und der unter Vakuum stehenden Walzenzylinder (2, 3, 4, 5) in der Entgasungs- und Kühlzone so eingestellt sind, dass die zu entgasenden Polymere im plastifizierten Zustand verbleiben,
k) der Polymerlösung im Bereich der vierten Vakuumzone (5) des vierten Walzenzylinders (5) flüssige thermische Vernetzer sowie gegebenenfalls Vernetzungsbeschleuniger, Farbstofflösungen oder Farbstoffdispersionen vorzugsweise kontinuierlich zudosiert werden, wobei sich die Dosieröffnungen (9) für diese Stoffe innerhalb des ersten Drittels der Verfahrenslänge dieser vierten Vakuumzone befinden,
l) jeder Walzenzylinder (2, 3, 4, 5) in der Entgasungs- und Kühlzone über einen, insbesondere über mindestens zwei separate Kreise (22, 23, 24, 25, 26, 27) zur Flüssigtemperierung verfügt,
wobei die Polymerlösung so gekühlt wird, dass es zu keiner durch die thermischen Vernetzer induzierte Vergelung der Polymerlösung innerhalb des Planetwalzenextruders oder gegebenenfalls stromab gekoppelter Folgeaggregate kommt,
m) der Restgehalt an Lösemittel in der Polymerlösung nach der dritten Vakuumzone weniger als 1 Gew.-%, vorzugsweise weniger als 0,5 Gew.-% und besonders bevorzugt weniger als 0,1 Gew.-% beträgt,
n) die Polymerlösung aus dem letzten Walzenzylinder (5) kommend einem Beschichtungsaggregat zugeführt wird.

2. Verfahren nach Anspruch 1,
**dadurch gekennzeichnet, dass**
die Füllzone aus einem Walzenzylinder (1) besteht.

3. Verfahren nach Anspruch 1 oder 2,
**dadurch gekennzeichnet, dass**
die überhitze Polymerlösung über eine Bohrung in der Wandung des atmosphärisch betriebenen Walzenzylinders (1) eingeführt wird, die sich vorzugsweise innerhalb des ersten Drittels der Walzenzylinderlänge befindet.

4. Verfahren nach zumindest einem der Ansprüche 1 bis 3,
**dadurch gekennzeichnet, dass**
die Planetenspindeln aller Walzenzylinder (1, 2, 3, 4, 5) der Füllzone sowie der sich stromab befindlichen Entgasungs- und Kühlzone über eine gemeinsame Zentralspindel angetrieben werden.

5. Verfahren nach zumindest einem der vorherigen Ansprüche,
**dadurch gekennzeichnet, dass**
die Anzahl der Planetenspindeln innerhalb des oder der atmosphärisch betriebenen Walzenzylinder (1) zwischen 50 % und 85 % der maximal möglichen Planetenspindelanzahl beträgt.

6. Verfahren nach zumindest einem der vorherigen Ansprüche,
**dadurch gekennzeichnet, dass**
die Anzahl der Planetenspindeln innerhalb der unter Vakuum betriebenen Walzenzylinder (2, 3, 4, 5) der Entgasungs- und Kühlzone jeweils zwischen 50 % und 85 %, vorzugsweise zwischen 60 % und 70 % der maximal möglichen Planetenspindelanzahl beträgt.

7. Verfahren nach zumindest einem der vorherigen Ansprüche,
**dadurch gekennzeichnet, dass**
die Anzahl der Planetenspindeln innerhalb des atmosphärisch betriebenen Walzenzylinders (1) zwischen 50 % und 85 % der maximal möglichen Planetenspindelanzahl beträgt und
die Anzahl der Planetenspindeln innerhalb der unter Vakuum betriebenen Walzenzylinder (2, 3, 4, 5) der Entgasungs- und Kühlzone jeweils zwischen 50 % und 85 %, vorzugsweise zwischen 60 % und 70 % der maximal möglichen Planetenspindelanzahl beträgt.

8. Verfahren nach zumindest einem der vorherigen Ansprüche,
**dadurch gekennzeichnet, dass**
stromauf vor dem Planetwalzenextruder ein Einschnecken-Förderteil vorgesehen ist.

9. Verfahren nach zumindest einem der vorherigen Ansprüche,
**dadurch gekennzeichnet, dass**
die Walzenzylinderöffnungen der mindestens vier die Entgasungs- und Kühlzone bildenden Walzenzylinder (2, 3, 4, 5) jeweils mit einem Produktniederhaltewerk ausgestattet sind, wobei das Produktniederhaltewerk vorzugsweise als kämmendes Doppelschneckenpaar ausgeführt ist.

10. Verfahren nach zumindest einem der vorherigen Ansprüche,
**dadurch gekennzeichnet, dass**
die Zudosierung der flüssigen beziehungsweise schmelzeflüssigen Modifizierungsstoffe über Öffnungen (10, 11, 12, 13) in den Wandungen der mindestens vier die Entgasungs- und Kühlzone bildenden Walzenzylinder (2, 3, 4, 5) erfolgt, wobei sich diese Öffnungen (10, 11, 12, 13) vorzugsweise innerhalb des ersten Drittels der jeweiligen Walzenzylinderlänge befinden, oder
die Zudosierung der flüssigen beziehungsweise schmelzeflüssigen Modifizierungsstoffe über radiale Bohrungen in den Stauringen (15, 16, 17) erfolgen, die sich zwischen den mindestens vier die Entgasungs- und Kühlzone bildenden Walzenzylinder (2, 3, 4, 5) befinden.

11. Verfahren nach zumindest einem der vorherigen Ansprüche,
**dadurch gekennzeichnet, dass**
die letzten beiden Walzenzylinder (4, 5) in der Entgasungs- und Kühlzone, vorzugsweise der dritte Walzenzylinder (4) und der vierte Walzenzylinder (5) jeweils über zwei separate Kreise (24, 25, 26, 27) zur Flüssigtemperierung verfügen, wobei mit den zwei Kreisen (24, 25, 26, 27) zur Flüssigtemperierung ein abfallender Temperaturgradient bei der Walzenzylindertemperierung eingestellt wird, bei dem das Verhältnis der Walzenzylindertemperaturen des zweiten Temperierkreises zum ersten Temperierkreis kleiner als 0,9, vorzugsweise kleiner als 0,8 und besonders bevorzugt kleiner als 0,7 ist.

12. Verfahren nach zumindest einem der vorherigen Ansprüche,
**dadurch gekennzeichnet, dass**
das Verhältnis der Temperatur der aufzukonzentrierenden Polymerlösung und der Temperatur der Polymerlösung nach der vierten Vakuumzone nicht größer als 0,75, vorzugsweise nicht größer als 0,65 ist.

13. Verfahren nach zumindest einem der vorherigen Ansprüche,
**dadurch gekennzeichnet, dass**
die Einspeisung der plastifizierten Polymere in den Planetwalzenextruder mittels einer Schmelzepumpe, mittels eines Ein- oder Mehrwellenextruders oder mittels einer Fass- oder Tankschmelzeinheit erfolgt.

14. Verfahren nach zumindest einem der vorherigen Ansprüche,
**dadurch gekennzeichnet, dass**
der Austritt der thermisch sensitiven Polymerlösung aus dem Planetwalzenextruder mittels einer am Ende des letzten Walzenzylinderbereiches gekoppelten Schmelzepumpe (18) erfolgt.

15. Verfahren nach zumindest einem der vorherigen Ansprüche,
**dadurch gekennzeichnet, dass**
die Polymerlösung aus dem letzten Walzenzylinder (5) kommend einem Beschichtungsaggregat inline zugeführt wird.

16. Verfahren nach zumindest einem der vorherigen Ansprüche,
**dadurch gekennzeichnet, dass**
das Beschichtungsaggregat ein Kalander oder eine Düse ist, durch den beziehungsweise durch die die Lösung auf ein Trägermaterial aufgebracht wird.

17. Verfahren nach zumindest einem der vorherigen Ansprüche,
**dadurch gekennzeichnet, dass**
es sich bei den Polymeren in der Polymerlösung um Polymere aus der Gruppe der nicht-thermoplastischen Elastomere, der thermoplastischen Synthesekautschuke, der Polyacrylate, der Polyurethane, der Polyepoxide sowie Mischungen in beliebigen Verhältnissen hieraus handelt.

18. Verfahren nach zumindest einem der vorherigen Ansprüche,
**dadurch gekennzeichnet, dass**
es sich bei den flüssigen beziehungsweise schmelzeflüssigen Modifizierungsstoffen um Harze, Weichmacher, Öle, Benetzungshilfsmittel oder Thixotropiermittel handelt, die gegebenenfalls mit weiteren Zuschlagstoffen abgemischt sind.

19. Verfahren nach zumindest einem der vorherigen Ansprüche,
**dadurch gekennzeichnet, dass**
als Lösungsmittel in der Polymerlösung Lösemittel aus der Gruppe der aliphatischen Ketone, der aliphatischen Alkohole, der aliphatischen Ester, der aliphatischen und aromatischen Kohlenwasserstoffe, der aliphatischen Polyether sowie beliebiger Mischungen hieraus verwendet werden.

20. Verfahren nach zumindest einem der vorherigen Ansprüche,
**dadurch gekennzeichnet, dass**
es sich bei der aus dem Planetwalzenextruder kommenden Mischung um eine Selbsthaftklebemassen oder um eine aushärtbare Strukturklebemasse handelt.

## Claims

1. A method for the production of thermally cross-linkable polymer melts by concentration of polymer solutions and simultaneous mixing thereof with modifying liquids in a planetary roller extruder, **characterized in that**
a) the planetary roller extruder consists of an atmospherically-operated feeding zone consisting of at least one roller cylinder (1) and of a vacuum-operated degassing and cooling zone which is located downstream, wherein the length of the atmospherically-operated feeding zone is not more than half, preferably not more than one third, of the total length of the planetary roller extruder,
b) the vacuum-operated degassing and cooling zone of the planetary roller extruder consists of at least four, preferably exactly four, coupled roller cylinders (2, 3, 4, 5), each of which having a vacuum opening (10, 11, 12, 13) in the barrel, the cross section of the vacuum opening constituting at least 5% of the barrel surface rolled over by the planetary spindles and via which the vacuums are applied,
c) all of the roller cylinders (2, 3, 4, 5) are separated from one another by intermediate rings (15, 16, 17) the free cross sections of which are selected in a manner such that the polymer to be processed can build up there and in this manner, all of the roller cylinders (2, 3, 4, 5) are separated from one another in a gas-tight manner,
d) each of the at least four roller cylinders (2, 3, 4, 5) in the degassing and cooling zone forms a vacuum zone (2, 3, 4, 5) which can be operated independently, wherein the ratio of the pressure in the first vacuum zone (2) of the first roller cylinder (2) to the pressure in the second vacuum zone (3) of the second roller cylinder (3) as well as the ratio of the pressure in the second vacuum zone (3) of the second roller cylinder (3) to the pressure in the third vacuum zone (4) of the third roller cylinder (4) is at least 3:1, preferably at least 5:1,
e) the pressure in the third vacuum zone (4) of the third roller cylinder (4) is less than 15 mbar, preferably less than 10 mbar and particularly preferably less than 5 mbar,
f) the pressure in the fourth vacuum zone (5) of the fourth roller cylinder (4) is preferably between exactly or more than 100 mbar and 500 mbar,
g) the polymers are fed to the planetary roller extruder in the form of a polymer solution consisting of polymers dissolved in solvent wherein, before entry into the planetary roller extruder, the polymer solution, under an overpressure of up to 10 bar, is brought to a temperature which is at least 60°C, preferably at least 80°C and particularly preferably at least 100°C above the temperature at which the same polymer solution boils under atmospheric pressure,
h) the polymer solution, as a superheated liquid, is fed directly into the first roller cylinder (1) of the atmospherically-operated feeding zone via a pressure-retaining valve (8),
i) after evaporation of at least portions of the solvent in the atmospherically-operated feeding zone, the mass flow of polymer solution fed into the first vacuum zone (2) of the first roller cylinder (2) is less than 75%, preferably less than 65%, particularly preferably less than 55% of the mass flow of polymer solution which is originally fed to the planetary roller extruder,
j) the inlet temperatures of the central spindle and of the roller cylinders (2, 3, 4, 5) in the degassing and cooling zone which are under vacuum are set such that the polymers to be degassed remain in the plasticized state,
k) liquid thermal crosslinkers as well as, if appropriate, crosslinking accelerators, colorant solutions or colorant dispersions are preferably continuously metered into the polymer solution in the region of the fourth vacuum zone (5) of the fourth roller cylinder (5), wherein the metering openings (9) for these substances are located within the first third of the processing length of this fourth vacuum zone,
l) each roller cylinder (2, 3, 4, 5) in the degassing and cooling zone has one, in particular at least two, separate circuits (22, 23, 24, 25, 26, 27) for liquid tempering,
wherein the polymer solution is cooled in a manner such that no gelling of the polymer solution induced by the thermal crosslinkers occurs within the planetary roll extruder or subsequent assemblies which might optionally be coupled downstream,
m) the residual content of solvent in the polymer solution after the third vacuum zone is less than 1% by weight, preferably less than 0.5% by weight and particularly preferably less than 0.1% by weight,
n) the polymer solution exiting the last roller cylinder (5) is fed to a coating assembly.

2. The method as claimed in claim 1,
**characterized in that**
the feeding zone consists of a roller cylinder (1).

3. The method as claimed in claim 1 or claim 2,
**characterized in that**
the superheated polymer solution is introduced via a bore in the wall of the atmospherically-operated roller cylinder (1), the bore preferably being located within the first third of the roller cylinder length.

4. The method according to at least one of claims 1 to 3,
**characterized in that**
the planetary spindles of all of the roller cylinders (1, 2, 3, 4, 5) of the feeding zone as well as of the downstream degassing and cooling zone are driven via a common central spindle.

5. The method as claimed in at least one of the preceding claims,
**characterized in that**
the number of planetary spindles within the atmospherically-operated roller cylinder (1) is between 50% and 85% of the maximum possible number of planetary spindles.

6. The method as claimed in at least one of the preceding claims,
**characterized in that**
the number of planetary spindles within the vacuum-operated roller cylinders (2, 3, 4, 5) of the degassing and cooling zone is respectively between 50% and 85%, preferably between 60% and 70%, of the maximum possible number of planetary spindles.

7. The method as claimed in at least one of the preceding claims,
**characterized in that**
the number of planetary spindles within the atmospherically-operated roller cylinder (1) is between 50% and 85% of the maximum possible number of planetary spindles, and the number of planetary spindles within the vacuum-operated roller cylinders (2, 3, 4, 5) of the degassing and cooling zone is respectively between 50% and 85%, preferably between 60% and 70%, of the maximum possible number of planetary spindles.

8. The method as claimed in at least one of the preceding claims,
**characterized in that**
a single-screw conveying portion is provided upstream of the planetary roller extruder.

9. The method as claimed in at least one of the preceding claims,
**characterized in that**
the roller cylinder openings of the at least four roller cylinders (2, 3, 4, 5) forming the degassing and cooling zone are respectively equipped with a product hold-down unit, wherein the product hold-down unit is preferably designed as an intermeshing twin-screw pair.

10. The method as claimed in at least one of the preceding claims,
**characterized in that**
the liquid or molten modifiers are metered-in via openings (10, 11, 12, 13) in the walls of the at least four roller cylinders (2, 3, 4, 5) forming the degassing and cooling zone, wherein these openings (10, 11, 12, 13) are preferably located within the first third of the respective roller cylinder length, or
the liquid or molten modifiers are metered-in via radial bores in the baffle rings (15, 16, 17) which are located between the at least four roller cylinders (2, 3, 4, 5) forming the degassing and cooling zone.

11. The method as claimed in at least one of the preceding claims,
**characterized in that**
the last two roller cylinders (4, 5) in the degassing and cooling zone, preferably the third roller cylinder (4) and the fourth roller cylinder (5), respectively have two separate circuits (24, 25, 26, 27) for liquid tempering,
wherein, with the two circuits (24, 25, 26, 27) for liquid tempering, a decreasing temperature gradient is established during the roller cylinder tempering, in which the ratio of the roller cylinder temperatures of the second temperature control circuit to the first temperature control circuit is less than 0.9, preferably less than 0.8 and particularly preferably less than 0.7.

12. The method as claimed in at least one of the preceding claims,
**characterized in that**
the ratio of the temperature of the polymer solution to be concentrated and the temperature of the polymer solution after the fourth vacuum zone is not greater than 0.75, preferably not greater than 0.65.

13. The method as claimed in at least one of the preceding claims,
**characterized in that**
the plasticized polymers are fed into the planetary roller extruder by means of a melt pump, by means of a single-shaft or multi-shaft extruder or by means of a drum or tank melting unit.

14. The method as claimed in at least one of the preceding claims,
**characterized in that**
the thermally sensitive polymer solution exits the planetary roller extruder by means of a melt pump (18) coupled to the end of the last roller cylinder region.

15. The method as claimed in at least one of the preceding claims,
**characterized in that**
the polymer solution exiting the last roller cylinder (5) is fed to an in-line coating assembly.

16. The method as claimed in at least one of the preceding claims,
**characterized in that**
the coating assembly is a calender or a nozzle through which the solution is applied to a carrier material.

17. The method as claimed in at least one of the preceding claims,
**characterized in that**
the polymers in the polymer solution are polymers from the group of non-thermoplastic elastomers, thermoplastic synthetic rubbers, polyacrylates, polyurethanes, polyepoxides as well as mixtures in any proportions.

18. The method as claimed in at least one of the preceding claims,
**characterized in that**
the liquid or molten modifiers are resins, plasticizers, oils, wetting agents or thixotropic agents, which are optionally mixed with further additives.

19. The method as claimed in at least one of the preceding claims,
**characterized in that**
solvents from the group of aliphatic ketones, aliphatic alcohols, aliphatic esters, aliphatic and aromatic hydrocarbons, aliphatic polyethers as well as any mixtures thereof are used as the solvent in the polymer solution.

20. The method as claimed in at least one of the preceding claims,
**characterized in that**
the mixture exiting the planetary roller extruder is a pressure-sensitive adhesive or a curable structured adhesive.

## Revendications

1. Procédé de fabrication de polymères en fusion, susceptibles de subir une réticulation thermique, par concentration de solutions de polymère et, simultanément, mélange avec des liquides modificateurs au sein d'une extrudeuse à cylindres planétaires, **caractérisé en ce que**
a) l'extrudeuse à cylindres planétaires est constituée d'une zone d'alimentation opérée à pression atmosphérique et comportant au moins un cylindre de fourreau (1) et d'une zone de dégazage et de refroidissement opérée sous vide, la longueur de la zone d'alimentation opérée à pression atmosphérique correspondant au maximum à la moitié, de préférence au maximum à un tiers, de la longueur totale de l'extrudeuse à cylindres planétaires,
b) la zone de dégazage et de refroidissement opérée sous vide de l'extrudeuse à cylindres planétaires est constituée d'au moins quatre, préférentiellement exactement de quatre, cylindres de fourreau (2, 3, 4, 5) couplés, chacun d'entre eux étant pourvu, dans son enveloppe, d'une ouverture à vide (10, 11, 12, 13) dont la section correspond à au moins 5 % de la surface d'enveloppe sur laquelle évoluent les tiges planétaires et servant à appliquer du vide,
c) tous les cylindres de fourreau (2, 3, 4, 5) sont séparés les uns des autres par des anneaux intermédiaires (15, 16, 17) dont les sections libres sont choisies telles que le polymère à traiter puisse y être retenu, faisant en sorte que l'ensemble des cylindres de fourreau (2, 3, 4, 5) soient séparés les uns des autres de manière étanche aux gaz,
d) chacun des au moins quatre cylindres de fourreau (2, 3, 4, 5) forme, dans la zone de dégazage et de refroidissement, une zone à vide (2, 3, 4, 5) qui est susceptible d'être opérée indépendamment, le rapport entre la pression dans la première zone à vide (2) du premier cylindre de fourreau (2) et la pression dans la deuxième zone à vide (3) du deuxième cylindre de fourreau (3) ainsi que le rapport entre la pression dans la deuxième zone à vide (3) du deuxième cylindre de fourreau (3) et la pression de la troisième zone à vide (4) du troisième cylindre de fourreau (4) étant au moins égal à 3:1, de préférence au moins égal à 5:1,
e) la pression dans la troisième zone à vide (4) du troisième cylindre de fourreau (4) est inférieure à 15 mbar, de préférence inférieure à 10 mbar et, avec une préférence particulière, inférieure à 5 mbar,
f) la pression dans la quatrième zone à vide (5) du quatrième cylindre de fourreau (5) étant préférentiellement comprise entre exactement ou plus de 100 mbar et 500 mbar,
g) l'extrudeuse à cylindres planétaires est alimentée en polymères sous forme d'une solution de polymères constituée de polymères dissous dans du solvent, la solution de polymères étant portée, avant d'entrer dans l'extrudeuse à cylindres planétaires sous une surpression pouvant atteindre 10 bar, à une température qui est supérieure d'au moins 60 °C, préférentiellement d'au moins 80 °C et, avec une préférence particulière, d'au moins 100 °C à la température d'ébullition à que cette même solution de polymères présente sous pression atmosphérique,
h) la solution de polymères est introduite sous forme d'un liquide surchauffé, à travers une valve à maintien de pression (8), directement dans le premier cylindre de fourreau (1) de la zone d'alimentation opérée à pression atmosphérique,
i) le flux massique de solution de polymères qui est introduit dans la première zone à vide (2) du premier cylindre de fourreau (2) correspond, après évaporation au moins partielle du solvant dans la zone d'alimentation opérée à pression atmosphérique, à moins de 75 %, de préférence à moins de 65 %, avec une préférence particulière à moins de 55 % du flux massique de solution de polymères initialement introduit dans l'extrudeuse à cylindres planétaires,
j) les consignes de température pour la tige centrale et pour les cylindres de fourreau (2, 3, 4, 5) mis sous vide dans la zone de dégazage et de refroidissement sont réglées telles que les polymères à dégazer restent dans un état plastifié,
k) des agents liquide de réticulation thermique et, le cas échéant, des accélérateurs de réticulation, des solutions de colorants ou des dispersions de colorants sont introduits, préférentiellement de manière continue, dans la solution de polymères au niveau de la quatrième zone à vide (5) du quatrième cylindre de fourreau (5), les orifices de dosage (9) destinés à ces substances se trouvant dans le premier tiers de la longueur effective de traitement de ladite quatrième zone à vide,
l) dans la zone de dégazage et de refroidissement, chacun des cylindres de fourreau (2, 3, 4, 5) dispose d'un, notamment d'au moins deux circuits (22, 23, 24, 25, 26, 27) séparés servant à la mise en température du liquide,
la solution de polymères étant refroidie de manière à empêcher que la solution de polymères ne subisse de gélification induite par les agents de réticulation thermique au sein de l'extrudeuse à cylindres planétaires ou, le cas échéant, d'appareils ultérieurs couplés à aval,
m) la teneur résiduelle en solvant dans la solution de polymères est, en aval de la troisième zone à vide, inférieure à 1 % en poids, de préférence inférieure à 0,5 % en poids et, avec une préférence particulière, inférieure à 0,1 % en poids,
n) la solution de polymères issue du dernier cylindre de fourreau (5) est introduite dans un appareil de revêtement.

2. Procédé selon la revendication 1,
**caractérisé en ce que**
la zone d'alimentation est constituée d'un cylindre de fourreau (1).

3. Procédé selon les revendications 1 ou 2,
**caractérisé en ce que**
la solution de polymères surchauffée est introduite à travers un trou dans la paroi du cylindre de fourreau (1) opéré à pression atmosphérique, lequel se trouve préférentiellement dans le premier tiers de la longueur du cylindre de fourreau.

4. Procédé selon au moins une des revendications 1 à 3,
**caractérisé en ce que**
les tiges planétaires de l'ensemble des cylindres de fourreau (1, 2, 3, 4, 5) de la zone d'alimentation ainsi que de la zone de dégazage et de refroidissement située en aval, sont entraînées par une tige centrale commune.

5. Procédé selon au moins une des revendications précédentes,
**caractérisé en ce que**
le nombre de tiges planétaire au sein du ou des cylindre(s) de fourreau (1) opéré(s) à pression atmosphérique correspond à entre 50 % et 85 % du nombre maximal possible de tiges planétaires.

6. Procédé selon au moins une des revendications précédentes,
**caractérisé en ce que**
le nombre de tiges planétaires au sein de chacun des cylindres de fourreau (2, 3, 4, 5) opérés sous vide de la zone de dégazage et de refroidissement correspond à entre 50 % et 85 %, préférentiellement entre 60 % et 70 %, du nombre maximal possible de tiges planétaires.

7. Procédé selon au moins une des revendications précédentes,
**caractérisé en ce que**
le nombre de tiges planétaire au sein du ou des cylindre(s) de fourreau (1) opéré(s) à pression atmosphérique correspond à entre 50 % et 85 % du nombre maximal possible de tiges planétaires, et
le nombre de tiges planétaires au sein de chacun des cylindres de fourreau (2, 3, 4, 5) opérés sous vide de la zone de dégazage et de refroidissement correspond à entre 50 % et 85 %, préférentiellement entre 60 % et 70 %, du nombre maximal possible de tiges planétaires.

8. Procédé selon au moins une des revendications précédentes,
**caractérisé en ce que**
un élément convoyeur de type mono-vis est disposé en amont de l'extrudeuse à cylindres planétaires.

9. Procédé selon au moins une des revendications précédentes,
**caractérisé en ce que**
les orifices de cylindre de fourreau de chacun des au moins quatre cylindres de fourreau (2, 3, 4, 5) formant la zone de dégazage et de refroidissement sont équipés d'une installation destinée à maintenir le produit en bas, ladite installation destinée à maintenir le produit en bas étant de préférence réalisée sous forme d'une paire de bi-vis s'engageant l'une dans l'autre.

10. Procédé selon au moins une des revendications précédentes, **caractérisé en ce que** l'introduction des agents modificateurs liquides ou fondus est réalisée à travers des orifices (10, 11, 12, 13) dans les parois des au moins quatre cylindres de fourreau (2, 3, 4, 5) formant la zone de dégazage et de refroidissement, ces orifices (10, 11, 12, 13) étant situés préférentiellement dans le premier tiers de la longueur de cylindre de fourreau, ou
l'introduction des agents modificateurs liquides ou fondus est réalisée à travers des trous radiaux dans les anneaux de rétention (15, 16, 17) qui se trouvent entre les au moins quatre cylindres compresseur (2, 3, 4, 5) formant la zone de dégazage et de refroidissement.

11. Procédé selon au moins une des revendications précédentes, **caractérisé en ce que** chacun des deux derniers cylindres de fourreau (4, 5) au sein de la zone de dégazage et de refroidissement, s'agissant préférentiellement du troisième cylindre de fourreau (4) et du quatrième cylindre de fourreau (5), dispose de deux circuits (24, 25, 26, 27) séparés destinés à la mise en température du liquide,
les deux circuits (24, 25, 26, 27) destinés à la mise en température du liquide servant à établir un gradient de température lors la de mise en température des cylindres de fourreau, de manière à ce que le rapport des températures de cylindre de fourreau entre le deuxième circuit de mise en température et le premier circuit de mise en température soit de préférence inférieur à 0,8 et, avec une préférence particulière, inférieur à 0,7.

12. Procédé selon au moins une des revendications précédentes,
**caractérisé en ce que**
le rapport entre la température de la solution de polymères destinée à subir une concentration et la température de la solution de polymères à l'issue de la quatrième zone à vide est inférieur ou égal à 0,75, de préférence inférieur ou égal à 0,65.

13. Procédé selon au moins une des revendications précédentes,
**caractérisé en ce que**
l'alimentation de l'extrudeuse à cylindres planétaires en polymères plastifiés est réalisée au moyen d'une pompe à matières fondues, au moyen d'une extrudeuse à un ou à plusieurs arbres, ou au moyen d'une unité de mise en fusion à fût ou à réservoir.

14. Procédé selon au moins une des revendications précédentes,
**caractérisé en ce que**
le retrait de la solution de polymères thermiquement sensible à l'issue de la l'extrudeuse à cylindres planétaires est réalisé au moyen d'une pompe à matières fondues (18) couplée à la fin de la dernière partie de cylindre de fourreau.

15. Procédé selon au moins une des revendications précédentes,
**caractérisé en ce que**
la solution de polymères est introduite, de manière intégré au processus, dans un appareil de revêtement lors qu'elle sort du dernier cylindre de fourreau (5).

16. Procédé selon au moins une des revendications précédentes,
**caractérisé en ce que**
l'appareil de revêtement est un calandre ou une buse à travers lequel/laquelle ladite solution est appliquée sur un matériau support.

17. Procédé selon au moins une des revendications précédentes,
**caractérisé en ce que**
les polymères dans la solution de polymères sont des polymères issus du groupe des élastomère non-thermoplastiques, des caoutchouc de synthèse thermoplastiques, des polyacrylates, des polyuréthanes, des polyépoxydes ainsi que des mélanges de ceux-ci selon tous rapports.

18. Procédé selon au moins une des revendications précédentes,
**caractérisé en ce que**
les agents modificateurs liquides ou fondus sont des résines, des plastifiants, des huiles, des agents auxiliaires de mouillage ou des agents de thixotropie auxquels sont mélangés, le cas échéant, d'autres additifs.

19. Procédé selon au moins une des revendications précédentes,
**caractérisé en ce que**
l'on utilise en tant que solvant, dans la solution de polymères, des solvants issus du groupe des cétones aliphatiques, des alcools aliphatiques, des esters aliphatiques, des hydrocarbures aliphatiques et aromatiques, des polyéthers aliphatiques ainsi des mélanges de tout type réalisés à partir de ceux-ci.

20. Procédé selon au moins une des revendications précédentes,
**caractérisé en ce que**
le mélange issu de l'extrudeuse à cylindres planétaires est une masse d'adhésif sensible à la pression ou une masse d'adhésif structural durcissable.
